# EUROPEAN PATENT SPECIFICATION

(11) **EP 2 925 044 B1**
(45) Date of publication and mention of the grant of the patent: **31.07.2019**
(21) Application number: 12889362.5
(22) Date of filing: 27.11.2012
(51) Int. Cl.: H04B 7/026, H04W 88/04, H04W 72/12, H04W 28/00

(54) **DATA TRANSMISSION METHOD, FORWARDING METHOD, RECEPTION METHOD, DEVICE, AND SYSTEM**
DATENÜBERTRAGUNGSVERFAHREN, WEITERLEITUNGSVERFAHREN, EMPFANGSVERFAHREN, VORRICHTUNG UND SYSTEM
PROCÉDÉ D'ÉMISSION DE DONNÉES, PROCÉDÉ DE TRANSMISSION, PROCÉDÉ DE RÉCEPTION, DISPOSITIF ET SYSTÈME

(43) Date of publication of application: 30.09.2015
(73) Proprietor: Huawei Technologies Co., Ltd., Longgang District Shenzhen, Guangdong 518129 (CN)
(72) Inventor: LI, Yue, Shenzhen Guangdong 518129 (CN); ZHU, Song, Shenzhen Guangdong 518129 (CN); GUO, Xiaolong, Shenzhen Guangdong 518129 (CN); LV, Yongxia, Shenzhen Guangdong 518129 (CN)
(74) Representative: Goddar, Heinz J.
(86) International application number: PCT/CN2012/085358
(87) International publication number: WO 2014/082208

(56) References cited:
- WO-A2-2012/053844
- CN-A- 1 901 400
- CN-A- 102 469 509
- CN-A- 102 780 993
- KR-A- 20120 041 143

## Description

### TECHNICAL FIELD

The present invention relates to the field of communications technologies, and in particular, to a data sending method, forwarding method, receiving method, apparatus, and system.

### BACKGROUND

With the high-speed development of mobile communications technologies, a mobile communications system has become an important technical means for people to upload and download data. However, current communications systems are for single user equipment operations. When an environment of a UE (User Equipment, user equipment) worsens, data transmission efficiency of the UE drastically decreases. Therefore, in the prior art, a concept of cooperative communications is put forward, thereby sending and receiving data of a UE through cooperation of multiple UEs. Specifically speaking, in cooperative communications, data that a base station sends to a target UE may be first sent to any other UE used as a transit UE near the target UE and the transit UE forwards the data to the target UE through a short-distance communications technology. In this way, the base station may select a UE with best channel conditions from several UEs to deliver data, for achieving the effect of a multiuser diversity (WO2012/053844).

In cooperative communications, an existing data sending method includes:
firstly, pre-distributing, by a base station, data that needs to be sent to a target UE to a logical channel buffer corresponding to each UE according to channel status information fed back by the target UE and any other UE near the target UE in a past period of time;
secondly, selecting, by the base station, a UE having a best channel status and sending the data in the logical channel buffer corresponding to the UE to the UE before sending each frame of data; and
thirdly, delivering, by the base station, pre-configured cooperative information to various UEs, so that the UE near the target UE forwards received relevant data to the target UE through the short-distance transmission technology according to the cooperative information.

Since the channel status of a UE may change all the time and the data sent to the target UE is pre-distributed to the logical channel buffer corresponding to each UE according to historical channel status of various UEs, the following problem may exist when the base station sends data:

The size of the data that the base station pre-distributes to the logical channel buffer corresponding to each user equipment for buffering cannot precisely match the size of data that the base station needs to schedule and send to the user equipment in an actual sending process, thereby resulting in low data transmission efficiency.

### SUMMARY

To solve the problem in the prior art that the size of data that a base station pre-distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, embodiments of the prevent invention provide a data sending method according to claim 1, a data forwarding method according to claim 3, a base station according to claim 7, and a user equipment according to claim 10.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a data sending method according to an embodiment of the present invention;
FIG. 2 is a method flowchart of a data sending method according to another embodiment of the present invention;
FIG. 3 is a schematic diagram of a protocol stack of a base station and a UE according to another embodiment of the present invention;
FIG. 4 is a schematic diagram of a data sending process according to another embodiment of the present invention;
FIG. 5 is a method flowchart of a data sending method according to still another embodiment of the present invention;
FIG. 6 is a schematic diagram of LTE D2D transmission according to still another embodiment of the present invention;
FIG. 7 is a schematic diagram of short-distance transmission according to still another embodiment of the present invention;
FIG. 8A and 8B are a method flowchart of a data sending method according to yet another embodiment of the present invention;
FIG. 9 is a structural block diagram of a MAC PDU format according to yet another embodiment of the present invention;
FIG. 10A and 10B are a method flowchart of a data sending method according to still another embodiment of the present invention;
FIG. 11 is a structural block diagram of a base station according to another embodiment of the present invention;
FIG. 12 is another structural block diagram of a base station according to another embodiment of the present invention;
FIG. 13 is still another structural block diagram of a base station according to another embodiment of the present invention;
FIG. 14 is still another structural block diagram of a base station according to another embodiment of the present invention;
FIG. 15 is a structural block diagram of a user equipment according to yet another embodiment of the present invention;
FIG. 16 is another structural block diagram of a user equipment according to yet another embodiment of the present invention;
FIG. 17 is still another structural block diagram of a user equipment according to yet another embodiment of the present invention;
FIG. 18 is still another structural block diagram of a user equipment according to yet another embodiment of the present invention;
FIG. 19 is another structural block diagram of a user equipment according to still another embodiment of the present invention;
FIG. 20 is another structural block diagram of a user equipment according to still another embodiment of the present invention;
FIG. 21 is still another structural block diagram of a user equipment according to still another embodiment of the present invention;
FIG. 22 is still another structural block diagram of a user equipment according to still another embodiment of the present invention;
FIG. 23 is still another structural block diagram of a user equipment according to still another embodiment of the present invention;
FIG. 24 is a structural block diagram of a base station according to yet another embodiment of the present invention;
FIG. 25 is a structural block diagram of a user equipment according to still another embodiment of the present invention; and
FIG. 26 is a structural block diagram of a user equipment according to yet another embodiment of the present invention.

### DESCRIPTION OF EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

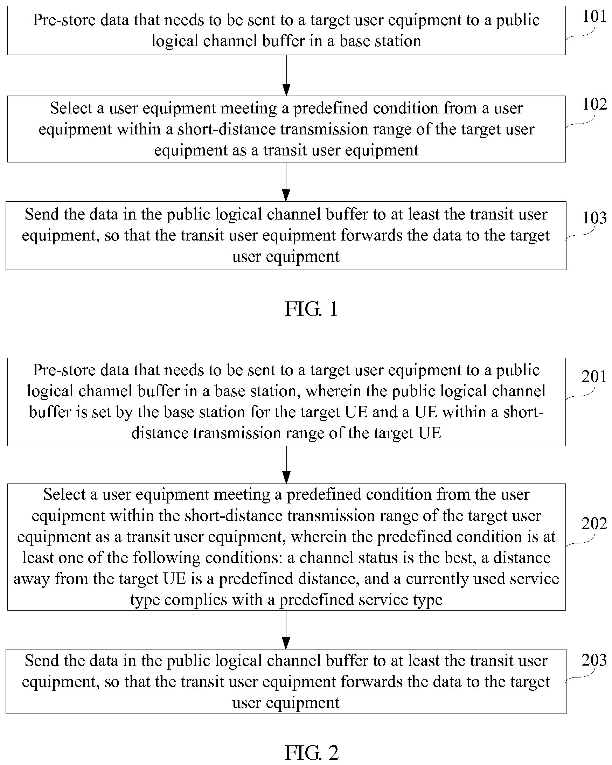

Refer to FIG. 1, which shows a method flowchart of a data sending method according to an embodiment of the present invention, and this embodiment mainly uses application of the data sending method to a base station as an example for description. The data sending method includes:
101. Pre-store data that needs to be sent to a target user equipment to a public logical channel buffer in the base station.

The base station may pre-store the data that needs to be sent to the target UE to the public logical channel buffer in the base station. The public logical information buffer is set by the base station for the target UE and a UE within a short-distance transmission range of the target UE.

Assume that an adopted short-distance transmission technology is Bluetooth. The UE within the short-distance transmission range of the target UE refers to a UE within a target UE-centered spatial range of 0-100m and preferably refers to a UE within a target UE-centered spatial range of 0-10m. If the base station selects a UE with the target UE as the center and with a distance not greater than 10m from the target UE as the UE within the short-distance transmission range, the base station may set a public logical channel buffer for the target UE and the UE with a distance not greater than 10m from the target UE, thereby storing the data to be sent to the target UE in the public logical channel buffer.

102. Select a user equipment meeting a predefined condition from the user equipments within the short-distance transmission range of the target user equipment as a transit user equipment.

In cooperative communications, the base station may first send the data that needs to be sent to the target UE to any other UE serving as the transit UE within the short-distance transmission range of the target UE, and then the transit UE forwards the received data to the target UE. Therefore, before sending the data of the target UE, the base station may select the UE meeting the predefined condition as the transit UE from any other UE within the short-distance transmission range of the target UE.

The predefined condition refers to at least one of the following conditions: a channel status is the best, a distance from the target UE is a predefined distance, and a currently used service type meets a predefined service type; and the transit UE may be also called a supporting UE and the target UE may be also called a beneficial UE in this embodiment.

103. Send the data in the public logical channel buffer to at least the transit user equipment, so that the transit user equipment forwards the data to the target user equipment.

The base station may send, after selecting the transit UE, the data buffered in the public logical channel buffer to at least the transit UE. After receiving the data, the transit UE forwards the data to the target UE.

To sum up, according to the data sending method provided by this embodiment, by pre-storing data that needs to be sent to a target user equipment to a public logical channel buffer that is set for the target user equipment and a user equipment within a short-distance transmission range of the target user equipment, selecting a user equipment meeting a predefined condition as a transit user equipment, and then sending the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data.

Refer to FIG. 2, which shows a method flowchart of a data sending method according to another embodiment of the present invention, and this embodiment mainly uses application of the data sending method to a base station as an example for description. The data sending method includes:
201. Pre-store data that needs to be sent to a target user equipment to a public logical channel buffer in the base station, where the public logical information buffer is set by the base station for the target UE and a UE within a short-distance transmission range of the target UE.

Assume that an adopted short-distance transmission technology is still Bluetooth. The base station may select a UE with a distance not greater than 10m from the target UE as the UE within the short-distance transmission range of the target UE according to a calculated distance between the target UE and any other UE. If the selected UE within the short-distance transmission range of the target UE includes only one UE, the base station may set a public logical channel buffer for the UE and the target UE and pre-store the data sent to the target UE to the public logical channel buffer; if the selected UE within the short-distance transmission range of the target includes more than one UE, for example, a first UE, a second UE, and a third UE, the base station may set a public logical channel buffer for the three UEs and the target UE and store the data that needs to be sent to the target UE to the public logical channel buffer. In this embodiment, assume that the UE within the short-distance transmission range of the target UE includes the first UE, the second UE, and the third UE.

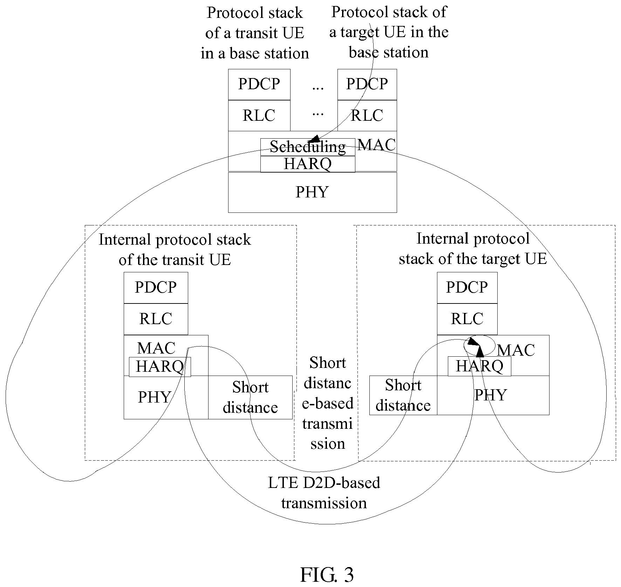

For details, refer to FIG. 3. In a cooperative communications method involved in FIG. 3, the base station may use the first UE, the second UE, the third UE, and a MAC layer of the target UE as a cooperative layer, and a new public logical channel buffer is added in the base station, so that the base station may pre-buffer the data that needs to be sent to the target UE in the newly added public logical channel buffer.

202. Select a user equipment meeting a predefined condition from the user equipments within the short-distance transmission range of the target user equipment as a transit user equipment, where the predefined condition refers to at least one of the following conditions: a channel status is the best, a distance from the target UE is a predefined distance, and a currently used service type meets a predefined service type.

If the selected UE within the short-distance transmission range of the target UE includes only one UE, the base station may select the UE as the transit UE. If the selected UE within the short-distance transmission range of the target includes a first UE, a second UE, and a third UE the base station may select a UE meeting the predefined condition from the three UEs as the transit UE. The predefined condition can be at least one of the following conditions:

### 1. The channel status is the best.

The UE may measure its own channel status information and feed back the measured channel status information expressed by a 4-bit progression with a numeric value ranging from 0 to 15 to the base station. As the value corresponding to the progression increases, the channel status of the UE improves. Therefore, after the first UE, the second UE, and the third UE feed back the channel status information to the base station, the base station compares channel status information of the three UEs and selects the UE with the largest numeric value corresponding to the channel status information as the transit UE according to a comparison result.

For example, in a current frame, if the numeric values corresponding to the channel status information of the three UEs that are obtained by the base station are "14, 7, 8" respectively, the base station selects the first UE as the transit UE. However, in a next frame, if the numeric values corresponding to the channel status information of the three UEs that are obtained by the base station are "4, 6, 13" respectively, the base station selects the third UE as the transit UE. In next two frames, if the numeric values corresponding to the channel status information of the three UEs that are obtained by the base station obtains "5, 14, 9" respectively, the base station selects the second UE as the transit UE.

### 2. The distance from the target user equipment is the predefined distance.

Alternatively, the base station may select a UE with the distance from the target UE being the predefined distance from the calculated UE within the short-distance transmission range of the target UE as the transit UE.

For example, the predefined condition set by the base station is that the distance from the target UE is "5m". Therefore, in the current frame, if the base station obtains through calculation that the distances between the first UE, the second UE, and the third UE and the target UE are "5m, 7m, 3m" respectively, the base station selects the first UE as the transit UE; in the next frame, if the calculated distances between the three UEs and the target UE are "4m, 5m, 8m" respectively, the base station selects the second UE as the transit UE; similarly, in the next two frames, if the calculated distances between the three UEs and the target UE are "6m, 2m, 5m" respectively, the base station selects the third UE as the transit UE.

### 3. The currently used service type meets the predefined service type.

Alternatively, the base station may also select the UE with the currently used service type meeting the predefined service type as the transit UE. For example, the base station sets a UE using a WIFI service among the UE within the short-distance transmission range of the target UE as the transit UE. Therefore, in the current frame, if the first UE is using WIFI, the base station selects the first UE as the transit UE; in the next frame, if the second UE is using WIFI, the base station selects the second UE as the transit UE; in the next two frames, if the third UE is using WIFI, the base station selects the third UE as the transit UE.

This embodiment uses the current frame as an example. Therefore, the base station selects the first UE as the transit UE.

203. Send the data in the public logical channel buffer to at least the transit user equipment, so that the transit user equipment forwards the data to the target user equipment.

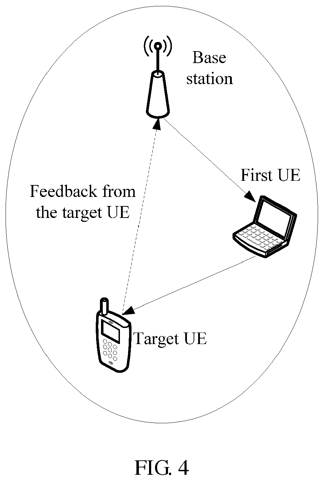

When sending the data of the target UE, the base station may directly obtain the data from the public logical channel buffer, perform scheduling, and send the data to each UE within the short-distance transmission range of the target UE. The sent data of the target UE is data in a MAC PDU (Protocol Data Unit, protocol data unit) format that is formed by one or more RBs (Resource Blocks, resource blocks) and has been encapsulated, where a corresponding ID (IDentity, identity number) is set for one or more RBs. Therefore, if the base station selects the first UE as the transit UE in the current frame, the base station schedules and sends the data of the target UE, that is, the data in the public logical channel buffer, to at least the first UE, so that the first UE forwards the received data to the target UE. For the schematic diagram of the sending process, refer to FIG. 4.

To sum up, according to the data sending method provided by this embodiment, by pre-storing data that needs to be sent to a target user equipment to a public logical channel buffer that is set for the target user equipment and a user equipment within a short-distance transmission range of the target user equipment, selecting a user equipment meeting a predefined condition as a transit user equipment, and then sending the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data.

Since multiple implementation manners are available for the above 203, the following describes various implementation manners in detail according to different embodiments.

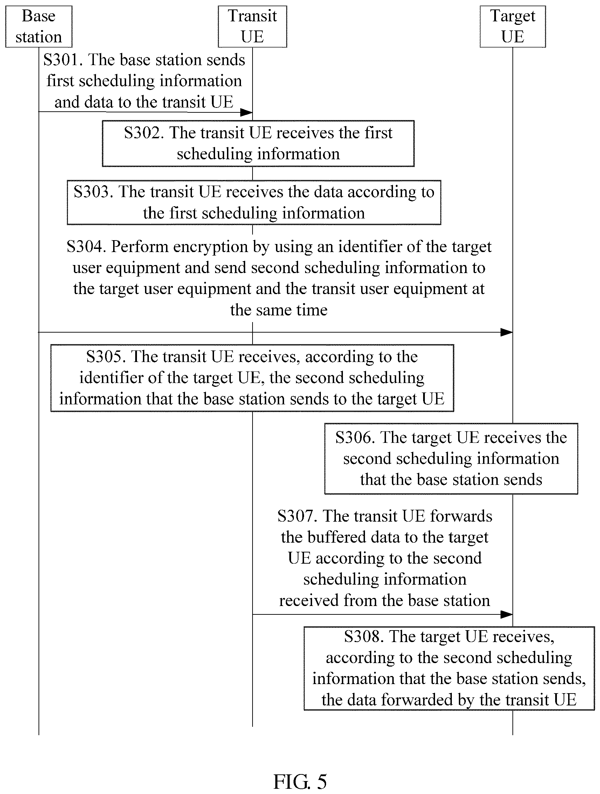

Refer to FIG. 5, which shows a method flowchart of a data sending method according to an embodiment of the present invention, this embodiment mainly uses application of the data sending method to a base station and sending, by a base station, data of a target UE to only a transit UE as an example for description. The data sending method includes:
301. A base station sends first scheduling information and data to a transit UE, where the first scheduling information and/or the data contains first indication information used to indicate that the data is data that needs to be forwarded.

After selecting a first UE as the transit UE, the base station may send the first scheduling information and the data to only the first UE. The first scheduling information may be DCI (Downlink Control Information, downlink control information) borne by a PDCCH; the data may be data that is in a MAC PDU format and is finally sent to the target UE. The base station may send the first scheduling information to the first UE through encryption by using an identifier of the first UE. Specifically, the base station may send the first scheduling information and the data to only the first UE by masking an identifier C-RNTI1 (Cell Radio Network Temporary Identity, cell radio network temporary identity) of the first UE in CRC (Cyclic Redundancy Check, cyclic redundancy check) of the PDCCH (Physical downlink control channel, physical downlink control channel). In other words, if the base station masks an identifier C-RNTI2 of the second UE in the CRC of the PDCCH, it indicates that information borne in the PDCCH is sent to the second UE; if the base station masks an identifier C-RNTI3 of the third UE in the CRC of the PDCCH, it indicates that the information borne in the PDCCH is sent to the third UE.

However, since the data is not sent to the transit UE for its own use but still needs to be finally sent to the target UE by the transit UE, in order to instruct the first UE not to use the received data for its own use but to buffer the received data and wait for the subsequent forwarding of the data to the target UE, the base station further needs to set first indication information in the first scheduling information, the data, or both of the first scheduling information and the data, where the first indication information is used to indicate that the data currently received by the transit UE is data that needs to be forwarded. According to different setting locations and forms of the first indication information, the first indication information may include at least one type of the following information:
1. An identifier of the target UE, which is stored in the first scheduling information.
   The base station may store an identifier C-RNTI2 of the target UE in the first scheduling information and use the C-RNTI2 as the first indication information.
2. An identifier of the target UE, which is stored in the data.
   The base station may store the C-RNTI2 in control information of the data, that is, in a MAC CE (Control Element, control information), and use the C-RNTI2 as the first indication information.
3. An identifier of the target UE, which is stored in the first scheduling information, and a predefined identifier of redundant bit occupancy, which is stored in the data.
   The base station may also store the C-RNTI2 in the first scheduling information and the predefined identifier of redundant bit occupancy in the MAC CE, and use both the C-RNTI2 and the predefined identifier of redundant bit occupancy as the first indication information. In this case, although signaling redundancy exists in the first indication information used to indicate that the data is data that needs to be forwarded, the same effect can be still achieved, which is not limited in this embodiment.
4. A predefined identifier of redundant bit occupancy, which is stored in the first scheduling information, and an identifier of the target UE, which is stored in the data.
   The base station may also store the predefined identifier of redundant bit occupancy in the first scheduling information and the C-RNTI2 in the MAC CE, and use both the C-RNTI2 and the predefined identifier of redundant bit occupancy as the first indication information. This is similar to the storing the predefined identifier of redundant bit occupancy in the MAC CE and the C-RNTI2 in the first scheduling information, and will not be described repeatedly herein.
5. An identifier of the target UE and a predefined identifier of redundant bit occupancy, which are stored in the first scheduling information.
   The base station may also store both the C-RNTI2 and the predefined identifier of redundant bit occupancy in the first scheduling information, and use them as the first indication information.
6. An identifier of the target UE and a predefined identifier of redundant bit occupancy, which are stored in the data.

The base station may also store the C-RNTI2 and the predefined identifier of redundant bit occupancy in the MAC CE, and use them as the first indication information.

302. The transit UE receives the first scheduling information.

Since the C-RNTI1 is masked in the CRC of the PDCCH, the first UE may receive the first scheduling information when monitoring the C-RNTI1 and any other UE does not need to receive the first scheduling information.

However, since all uplink and downlink resource scheduling information (MCS, resource allocation) in an LTE (Long Term Evolution, long term evolution) system is borne in the PDCCH, that is, all the uplink and downlink resource scheduling information is stored in the DCI, when receiving the first scheduling information, the first UE receives scheduling information for uploading or receiving the data.

303. The transit UE receives the data according to the first scheduling information.

After receiving the first scheduling information, the first UE may receive, according to an uplink and downlink resource scheduling manner carried in the received first scheduling information, the data that the base station sends.

It should be noted that, after the first UE receives the data according to the first scheduling information, the first UE may determine that the C-RNTI2 in the first indication information does not match its own identifier C-RNTI1 because the first scheduling information and/or the data received by the first UE contains the first indication information, and the first indication information at least includes the C-RNTI2. In this case, the first UE, after receiving the data, does not upload the data according to a traditional manner PHY (Physical Layer Interface, physical layer)->MAC->RLC->PDCP, decode the data, or use the data for its own use, but buffers the received data.

The first UE may buffer the data in a newly added forwarding buffer or in any other register, which is not limited in this embodiment. This embodiment uses the buffering the data in the forwarding buffer as an example.

It should be supplemented that, after the first UE receives the data according to the first scheduling information, the first UE not only monitors, according to the C-RNTI1, the scheduling information that the base station delivers to the first UE but also monitors, according to the C-RNTI2 in the first indication information, the scheduling information that the base station delivers to the target UE, so that the first UE subsequently forwards the data to the target UE.

In addition, after the first UE receives the data that the base station sends, if the first UE correctly receives the data, the first UE feeds back data acknowledgement information ACK (Acknowledgement, acknowledgement information) to the base station; if the data that the first UE receives is incorrect, the first UE feeds back negative data information NACK (negative acknowledgement, negative information) to the base station.

304. Perform encryption by using the identifier of the target user equipment and send second scheduling information to the target user equipment and the transit user equipment at the same time.

If the first UE correctly receives the data that the base station sends, the base station may receive the ACK fed back by the first UE. In this case, the base station sends the second scheduling information to the target UE and the first UE by masking the C-RNTI2 in the CRC of the PDCCH. The second scheduling information refers to the DCI borne in the PDCCH. Optionally, the base station may also store a power domain in the second scheduling information, thereby eliminating interference from any other UE during data sending.

305. The transit UE receives, according to the identifier of the target UE, the second scheduling information that the base station sends to the target UE.

Since the first UE monitors the C-RNTI1 and the C-RNTI2 in real time after receiving the data, when the base station sends the second scheduling information to the target UE and the first UE by masking the C-RNTI2 in the CRC of the PDCCH, the first UE may receive the second scheduling information that the base station sends to the first UE because the first UE may determine that the C-RNTI2 masked in the CRC of the PDCCH matches the monitored C-RNTI2.

306. The target UE receives the second scheduling information that the base station sends.

When the base station sends the second scheduling information to the target UE and the first UE by masking the C-RNTI2 in the CRC of the PDCCH, the target UE may receive, according to the C-RNTI2, the second scheduling information sent by the base station.

It should be noted that, steps 305 and 306 may be executed in sequence or at the same time, which is not limited in this embodiment.

307. The transit UE forwards the buffered data to the target UE according to the received second scheduling information that the base station sends.

The first UE may forward, after receiving the second scheduling information that the base station sends, the buffered data to the target UE according to the received second scheduling information.

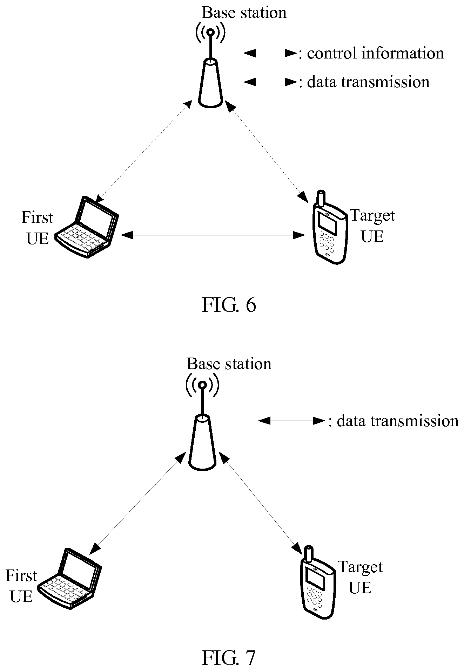

The first UE forwards the data to the target UE according to the second scheduling information by using any one of the following manners:
1. Use an LTE D2D (Device to Device, end to end) transmission technology to forward the data buffered by the transit UE to the target UE.
   The first UE uses, after receiving the second scheduling information that the base station sends, the LTE D2D transmission technology to forward, according to a scheduling manner carried in the second scheduling information, the data buffered in the forwarding buffer to the target UE. When the LTE D2D transmission technology is used for data sending, the data may be directly sent to the target UE, without passing the base station, thereby saving resources and time. For an LTE D2D transmission model, refer to FIG. 6.
2. Use a short-distance transmission technology to forward the data buffered by the transit UE to the target UE.

The short-distance transmission technology includes any one of the following technologies: Bluetooth transmission, WiFi (wireless fidelity, wireless fidelity technology) transmission, infrared data transmission, an ultrawideband technology, and a near field communications technology.

The first UE may use, after receiving the second scheduling information that the base station sends, the short-distance transmission technology to forward, according to the scheduling manner carried in the second scheduling information, the data buffered in the forwarding buffer to the target UE. For a transmission model of the short-distance transmission, refer to FIG. 7.

308. The target UE receives, according to the second scheduling information that the base station sends, the data forwarded by the transit UE.

When the target UE receives the second scheduling information that the base station sends and the first UE sends the data buffered in the forwarding buffer to the target UE, the target UE may receive, according to the second scheduling information, the data forwarded by the first UE.

In addition, the target UE feeds back, when correctly receiving the data forwarded by the first UE, the ACK to the base station. After that, the base station does not need to schedule the first UE for retransmission. Therefore, the first UE may delete the data buffered in the forwarding buffer after first predefined time.

For example, when the first UE sends the data in the forwarding buffer to the target UE, if the target UE correctly receives the data, the target UE performs decoding according to a corresponding ID configured for one or more RBs in the data during encapsulation and feeds back the ACK to the base station. However, since the target UE has correctly received the data and therefore the base station is no longer required to schedule the first UE for retransmission, the first UE deletes the data buffered in the forwarding buffer after the first predefined time such as "10 ms" because no retransmission scheduling information sent by the base station is received.

However, if the data that the target UE receives and the first UE forwards is incorrect, the target UE feeds back the NACK to the base station. In this case, the base station re-schedules the first UE to send the data buffered in the forwarding buffer to the target UE. This retransmission process may be performed multiple times.

During specific implementation, the first UE may start a retransmission monitoring window configured with maximum forwarding times and maximum forwarding time and execute an HARQ (Hybrid Automatic Repeat Request, hybrid automatic retransmission) process. In addition, the first UE monitors the C-RNTI1 and the C-RNTI2 at the same time. Before the maximum forwarding times and the maximum forwarding time are reached, the base station may schedule the first UE to perform a retransmission process by re-sending the second scheduling information. When the maximum forwarding times or the maximum forwarding time is reached, the first UE no longer monitors the C-RNTI2 and deletes the data buffered in the forwarding buffer. In this case, the base station may perform the retransmission process by re-executing 301 to 308, which will not be described repeatedly herein.

It should be supplemented that, if the HARQ process for feeding back information to the base station does not exist when the target UE receives the data forwarded by the first UE, the first UE deletes the data in the forwarding buffer after sending the data buffered in the forwarding buffer to the target UE for the first time.

To sum up, according to the data sending method provided by this embodiment, by pre-storing data that needs to be sent to a target user equipment to a public logical channel buffer that is set for the target user equipment and a user equipment within a short-distance transmission range of the target user equipment, selecting a user equipment meeting a predefined condition as a transit user equipment, and then sending the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data. In addition, in this embodiment, the entire data sending process is controlled by the base station. This solves the following problem in the prior art that if data sending fails, the base station cannot re-send data to the corresponding user equipment in time, thereby resulting in low data transmission efficiency.

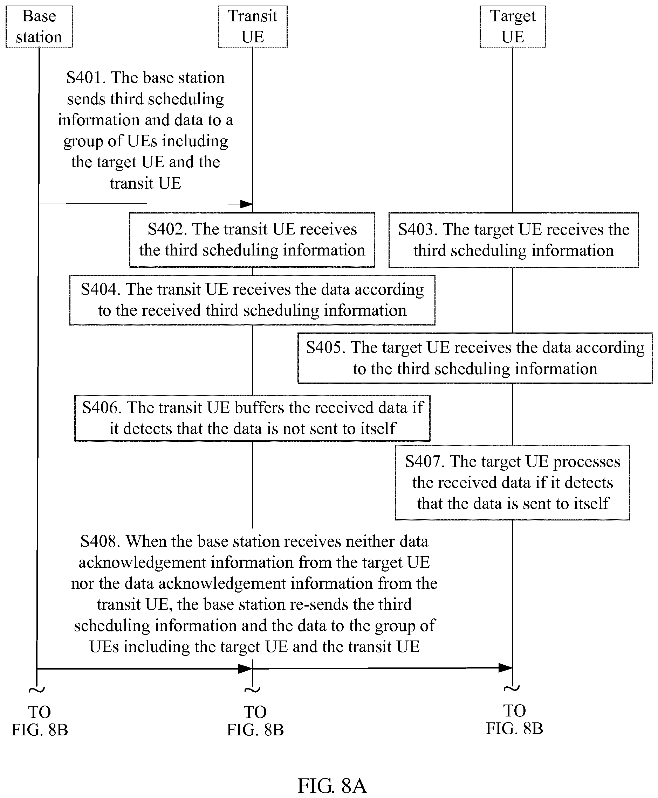

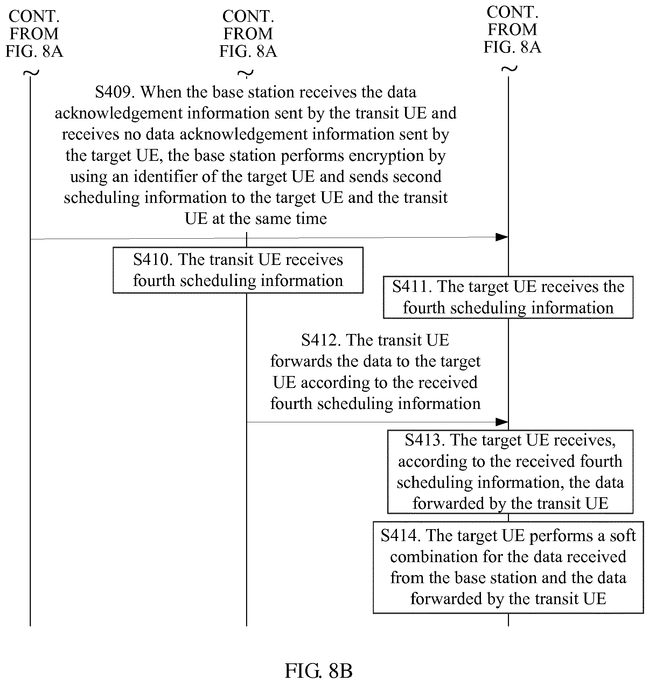

Refer to FIG. 8A and 8B, which shows a method flowchart of a data sending method according to yet another embodiment of the present invention, and this embodiment mainly uses application of the data sending method to a base station and sending, by a base station, data of a target UE to a transit UE and the target UE at the same time as an example for description. The data sending method includes:
401. A base station sends third scheduling information and data to a group of UEs including a target UE and a transit UE.

In this embodiment, the base station sends, after selecting a first UE as the transit UE, the third scheduling information and the data to the target UE and the first UE. The third scheduling information may be DCI borne in a PDCCH and the data may be data that is in a MAC PDU format and needs finally to be sent to the target UE. In an existing method, in order to send the third scheduling information and the data to the target UE and the first UE at the same time, the base station may set a reference identifier group RNTI for a group of UEs including the target UE, the first UE, a second UE, and a third UE, perform encryption by using the group RNTI and send the third scheduling information and the data to the group of UEs including the target UE and the transit UE, that is, send, by masking the group RNTI in the CRC of the PDCCH, the third scheduling information and the data to the group of UEs that correspond to the group RNTI and include the target UE and the first UE.

However, in this embodiment, the base station aims to send the data to the target UE and the first UE and not to the group of UEs. Therefore, in order to tell the target UE and the first UE in the group of UEs corresponding to the group RNTI to receive the data sent by the base station and the second and third UEs in the group to discard the data sent by the base station, the base station may store a C-RNTI1 and a C-RNTI2 in a MAC CE of the data. Optionally, the base station may also store a C-RNTI1 and a C-RNTI2 in the third scheduling information. In this case, although the same effect can be achieved, signaling may be insufficient because the third scheduling information stores the C-RNTI1 and the C-RNTI2 in addition to traditional scheduling information. A person skilled in the art generally does not adopt this manner, and therefore this embodiment does not describe this manner.

In addition, since the data is not sent to the first UE for its own use but needs to be forwarded to the target UE by the first UE, in order to instruct the first UE to buffer the received data and wait for subsequent forwarding of the data to the target UE on the one hand, and instruct the target UE to use the received data as its own data on the other hand, the base station further needs to set second indication information in the data, where the second indication information is used to indicate that the data currently received by the first UE is data that needs to be forwarded to the target UE and the data currently received by the target UE is data finally sent to the target UE. In other words, the second indication information is used to distinguish the first UE form the target UE. According to different setting positions and forms of the second indication information, the second indication information may include at least one type of the following information:

### 1. A predefined identifier of redundant bit occupancy.

The base station may set, in condition that the MAC CE stores the C-RNTI1 and the C-RNTI2, a predefined identifier of redundant bit occupancy for the C-RNTI1 and the C-RNTI2 in the MAC CE respectively and use the predefined identifier as the second indication information, where, the predefined identifier is used to instruct the first UE to buffer the received data and subsequently forward the data to the target UE on the one hand, and instruct the target UE to use the received data for its own use on the other hand.

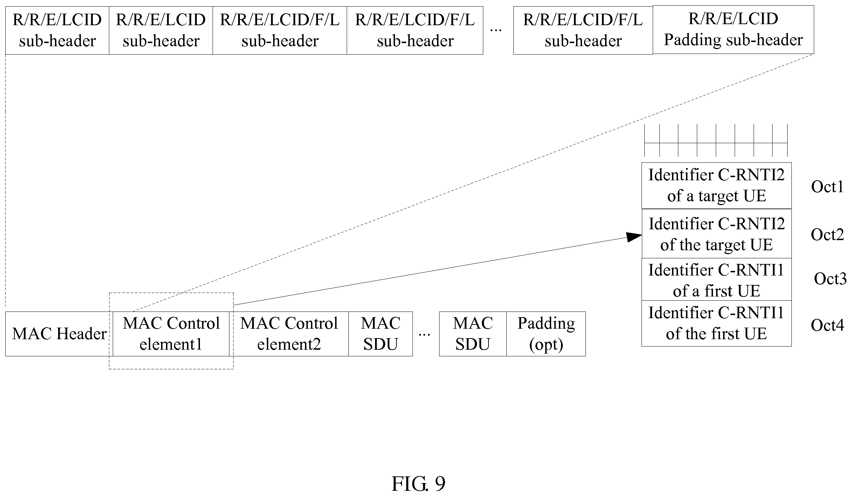

For example, refer to FIG. 9, which shows a MAC PDU format in cooperative communications. The base station sets a predefined identifier "1" of redundant bit occupancy for an identifier of the first UE, that is, the C-RNTI1, and a predefined identifier "0" of redundant bit occupancy for an identifier of the target UE, that is, the C-RNTI2, in the MAC CE, and sets the first UE corresponding to the C-RNTI1 with the predefined identifier being 1 to buffer the received data and wait for subsequent forwarding of the data to the target UE corresponding to the C-RNTI2 with the predefined identifier being 0, and the target UE corresponding to the C-RNTI2 with the predefined identifier being 0 to directly receive the data.

### 2. A predefined arrangement or storage format of an identifier of the target UE and an identifier of the transit UE.

The base station may also store the C-RNTI1 and the C-RNTI2 in the MAC CE according to a certain arrangement manner and use the arrangement manner as the second indication information.

For example, referring to FIG. 9, the base station stores the C-RNTI2 in bits oct1 and oct2 of the MAC CE and the C-RNTI1 in bits oct3 and oct4 of the MAC CE, and sets the target UE corresponding to the C-RNTI2 that is stored in bits oct1 and oct2 to directly receive the data and the first UE corresponding to the C-RNTI1 that is stored in bits oct3 and oct4 to buffer the received data and wait for subsequent forwarding of the data to the target UE corresponding to the C-RNTI2 that is stored in bits oct1 and oct2.

It should be noted that, this embodiment only uses the sending the third scheduling information and the data to the target UE and the first UE at the same time as an example. In an actual implementation process, the third scheduling information and the data may be first sent to the target UE and then to the first UE; or the third scheduling information and the data may be first sent to the first UE and then to the target UE, which is not specifically limited in this embodiment.

402. The transit UE receives the third scheduling information.

Since the group RNTI is masked in the CRC of the PDCCH and the group RNTI corresponds to the group of UEs including the target UE and the first UE, the third scheduling information may be received when the first UE monitors the group RNTI.

403. The target UE receives the third scheduling information.

This step is similar to 402 and will not be described repeatedly herein.

It should be noted that, 402 and 403 may be executed in sequence or at the same time, which is not limited in this embodiment.

404. The transit UE receives the data according to the received third scheduling information.

When receiving, according to the third scheduling information, the data that the base station sends, the first UE receives, according to the third scheduling information, the data that the base station sends because the first UE may query its own identifier C-RNTI1 from the MAC CE. In other words, after the base station sends the third scheduling information and the data to the group of UEs corresponding to the group RNTI, when receiving data, the group of UEs queries whether the MAC CE contains their own identifier. If yes, the UE receives the data that the base station sends; if not, the UE discards the data that the base station sends.

405. The target UE receives the data according to the third scheduling information.

This step is similar to 404 and will not be described repeatedly herein.

It should be noted that, 404 and 405 may be executed in sequence or at the same time, which is not limited in this embodiment.

406. The transit UE buffers the received data if the transit UE detects that the data is not sent to itself.

After receiving, according to the third scheduling information, the data that the base station sends, the first UE may perform HARQ decoding for the received data. Since the MAC CE of the data contains the second indication information and the second indication information indicates that the data currently received by the first UE needs to be forwarded to the target UE, the first UE buffers the data after performing HARQ decoding correctly.

The first UE may buffer the data in a newly added forwarding buffer or in any other register, which is not limited in this embodiment. This embodiment uses the buffering the data in the forwarding buffer as an example.

It should be supplemented that, the first UE sends an ACK to the base station if the data obtained after the first UE performs HARQ decoding is correct and the first UE sends no ACK to the base station if the data obtained after the first UE performs HARQ decoding is incorrect.

After performing HARQ decoding for the received data, the first UE not only monitors, according to the C-RNTI1 in the data, the scheduling information that the base station delivers to the first UE but also monitors, according to the C-RNTI2 in the data, the scheduling information that the base station delivers to the target UE, so that the first UE subsequently forwards the data to the target UE.

407. The target UE processes the received data if the target UE detects that the data is sent to itself.

After receiving, according to the third scheduling information, the data that the base station sends, the target UE may perform HARQ decoding for the received data. Since the MAC CE of the data contains the second indication information and the second indication information is used to indicate that the data currently received by the target UE is data sent to the target UE for its own use, the target UE may directly receive and use the data after performing HARQ decoding correctly.

It should be supplemented that, the target UE sends the ACK to the base station if the data obtained after the target UE performs HARQ decoding is correct and the first UE sends no ACK to the base station if the data obtained after the target UE performs HARQ decoding is incorrect.

In addition, 406 and 407 may be executed in sequence or at the same time, which is not limited in this embodiment.

408. When the base station receives neither data acknowledgement information from the target UE nor data acknowledgement information from the transit UE, the base station re-sends the third scheduling information and the data to the group of UEs including the target UE and the transit UE.

After sending the third scheduling information and the data to the group of UEs including the target UE and the transit UE, the base station receives no ACK sent by the target UE and the first UE if both the data received by the target UE and the data received by the first UE are incorrect. In this case, the base station may start a retransmission process by re-executing 401 to 408, which will not be described repeatedly herein.

409. When the base station receives the data acknowledgement information sent by the transit UE and receives no acknowledgement information sent by the target UE, the base station performs encryption by using the identifier of the target UE and sends second scheduling information to the target UE and the transit UE at the same time.

After the base station sends the third scheduling information and the data to the group of UEs including the target UE and the transit UE, the first UE correctly receives the data and the data received by the target UE is incorrect, that is, the base station receives only the ACK fed back by the first UE and receives no ACK fed back by the target UE. In this case, the base station may perform encryption by using the C-RNTI2 and send the second scheduling information to the target UE and the first UE at the same time. Specifically, the base station may send the second scheduling information to the target UE and the first UE by masking the C-RNTI2 in the CRC of the PDCCH. The second scheduling information may be the DCI borne in the PDCCH.

410. The transit UE receives the second scheduling information that the base station sends.

Since the first UE monitors the C-RNTI1 and the C-RNTI2 in real time after receiving the data, when the base station sends the second scheduling information to the target UE and the first UE by masking the C-RNTI2 in the CRC of the PDCCH, the first UE may receive the second scheduling information that the base station sends to the first UE because the first UE may determine that the C-RNTI2 masked in the CRC of the PDCCH matches the monitored C-RNTI2.

411. The target UE receives the second scheduling information that the base station sends.

When the base station sends the second scheduling information to the target UE by masking the C-RNTI2 in the CRC of the PDCCH, the target UE may receive, according to the C-RNTI2, the second scheduling information sent by the base station.

It should be noted that, 410 and 411 may be executed in sequence or at the same time, which is not limited in this embodiment.

412. The transit UE forwards the data to the target UE according to the received second scheduling information.

The first UE may forward, after receiving the second scheduling information that the base station sends, the data buffered in the forwarding buffer to the target UE according to the received second scheduling information.

The forwarding manner for the first UE to forward the data to the target UE is the same as the forwarding manner in 308 of the preceding embodiment and will not be described repeatedly herein.

413. The target UE receives, according to the received second scheduling information, the data forwarded by the transit UE.

After receiving the second scheduling information that the base station sends, the target UE receives, according to the second scheduling information, the data forwarded by the first UE.

414. The target UE performs a soft combination for the received data that the base station sends and the received data that the transit UE sends.

After receiving the data forwarded by the first UE, the target UE may perform an HARQ soft combination for the data sent by the base station and the data forwarded by the first UE because the target UE may use a same HARQ process to receive the data sent by the base station and the data forwarded by the first UE.

When the data obtained after the target UE performs a combination is correct, the target UE feeds back the ACK to the base station. After that, the base station does not need to schedule the first UE for retransmission. The first UE may delete the data buffered in the forwarding buffer after first predefined time, which is the same as the processing step when the data received by the target UE is correct in 308 and will not be described repeatedly herein.

However, if an error still exists after the target UE combines the data sent by the base station and the data forwarded by the first UE, the target UE feeds back a NACK to the base station. In this case, the base station may use the method that the base station schedules the first UE to forward the data to the target UE in the above embodiments to forward the data buffered in the forwarding buffer of the first UE to the target UE, which will not be described repeatedly herein.

To sum up, according to the data sending method provided by this embodiment, by pre-storing data that needs to be sent to a target user equipment to a public logical channel buffer that is set for the target user equipment and a user equipment within a short-distance transmission range of the target user equipment, selecting a user equipment meeting a predefined condition as a transit user equipment, and then sending the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data. In addition, the base station in this embodiment also sends the data to the target user equipment while sending the data to the transit user equipment, which achieves the effect that the base station schedules the transit user equipment to forward its received data to the target user equipment only when the data received by the target user equipment is incorrect.

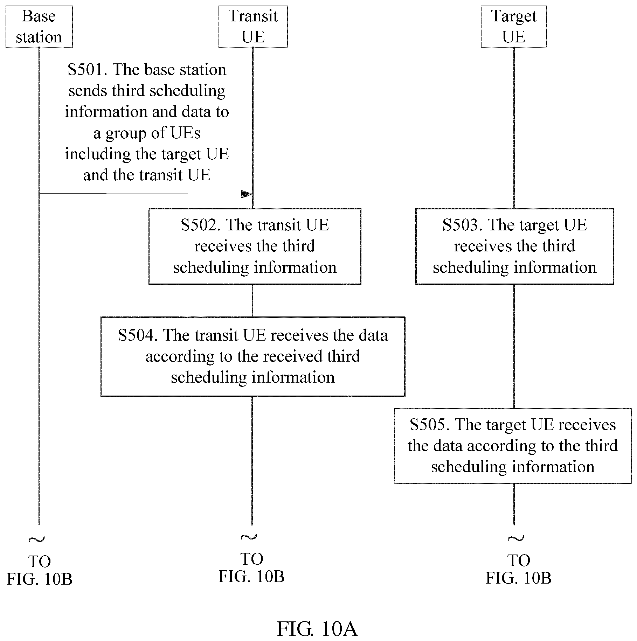

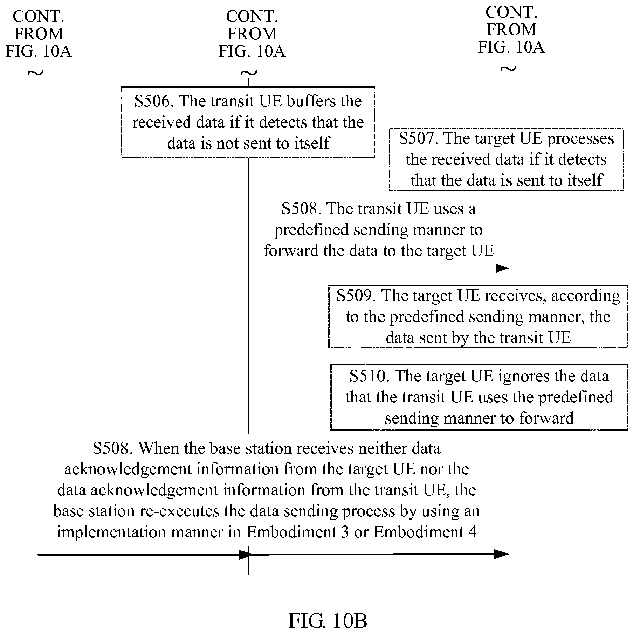

Refer to FIG. 10A and 10B, which shows a method flowchart of a data sending method according to still another embodiment of the present invention, and this embodiment mainly uses application of the data sending method to a base station and sending, by a base station, data of a target UE to a transit UE and the target UE as an example for description. The difference between this embodiment and Embodiment 4 is that: after the base station sends the data to the transit UE, the transit UE does not need to forward the data to the target UE according to scheduling information that the base station sends but forwards the data to the target UE according to a predefined sending manner. The data sending method includes:
501. A base station sends third scheduling information and data to a group of UEs including a target UE and a transit UE.
502. The transit UE receives the third scheduling information.
503. The target UE receives the third scheduling information.
504. The transit UE receives the data according to the received third scheduling information.
505. The target UE receives the data according to the third scheduling information.
506. The transit UE buffers the received data if the transit UE detects that the data is not sent to itself.
507. The target UE processes the received data if the target UE detects that the data is sent to itself.

501 to 507 in this embodiment are similar to 401 to 407 in the above embodiment. For detailed descriptions, refer to the above embodiment, which will not be described repeatedly herein.

A difference lies in 506: after performing HARQ decoding for the data, a first UE no longer needs to receive the scheduling information that the base station sends, for forwarding the data to the target UE, but implements forwarding by using a predefined sending method, and therefore the first UE may not monitor a C-RNTI2.

508. The transit UE forwards the data to the target UE by using a predefined sending manner.

After correctly receiving the data that the base station sends, the first UE may forward the data to the target UE by using the predefined sending manner. The predefined sending manner includes at least one of the following manners:

### 1. A predefined time bias.

The base station may set the predefined sending manner to the predefined time bias, and the predefined time bias may be any one of a time bias set in advance and a time bias calculated according to a predefined calculation manner.

For example, if the set predefined sending manner is that the first UE sends the data in a forwarding buffer to the target UE '4 ms' after correctly receiving the data, the first UE forwards the data buffered in the forwarding buffer to the target UE 4 ms after correctly receiving data in a MAC PDU format. The base station may further set the predefined calculation manner to mapping a value obtained through C-RNTI2 modulo to a fixed frame after the first UE correctly receives the data as the predefined time bias. If the value obtained through C-RNTI2 modulo is 5, the first UE forwards the data in the MAC PDU format in the forwarding buffer to the target UE at a fifth frame after correctly receiving the data.

### 2. A predefined frequency-domain location.

The base station may set the predefined sending manner to the predefined frequency-domain location, and the predefined frequency-domain location may be any one of a frequency-domain location set in advance and a frequency-domain location calculated according to a predefined calculation manner.

For example, if the set predefined sending manner is that the first UE sends the data in the forwarding buffer to the target UE at resource PRBs 6 to 8 of a physical radio bearer in an uplink band after correctly receiving the data, the first UE sends the data in the forwarding buffer to the target UE at PRB resources 6 to 8 in the uplink band after correctly receiving the data. The base station may also set the predefined calculation manner to a band of a downlink resource location where the first UE receives the data sent by the base station, which is mapped to the uplink bank as the predefined sending manner. If the downlink resource location where the first UE receives the data sent by the base station may be mapped to resources 5 to 8 in the uplink band, the first UE forwards the data in the forwarding buffer to the target UE when the uplink band of the first UE is at resources 5 to 8.

### 3. A predefined coding manner.

The base station may also set the predefined sending manner to the predefined coding manner. The coding manner may be any one of a fixed coding manner and a coding manner that is the same as the coding manner in the downlink. In this case, the first UE may forward the buffered data to the target UE according a predefined coding bias. For example, if the fixed coding manner is set to "QPSK (Quadrature Phase Shift Keying), 1/3 coding rate", the first UE sends the data in the forwarding buffer to the target UE when the coding manner used by the first UE is the fixed coding manner "QPSK, 1/3 coding rate".

509. The target UE receives, according to the predefined sending manner, the data sent by the transit UE.

When the first UE sends the data buffered in the forwarding buffer to the target UE by using the predefined sending manner, the target UE receives, according to the predefined sending manner, the data sent by the first UE accordingly.

The target UE feeds back an ACK to the base station when correctly receiving the data. After that, the base station does not need to schedule the first UE for retransmission. Therefore, the first UE may delete the data buffered in the forwarding buffer after first predefined time.

If the data received by the target UE is incorrect, the target UE feeds back a NACK to the base station. In this case, the base station may use the method of scheduling the first UE to send the data buffered in the forwarding buffer to the target UE in Embodiment 3 or Embodiment 4, so that the first UE forwards the data buffered in the forwarding buffer to the target UE, which will not be described repeatedly herein.

510. The target UE ignores the data that the transit UE forwards by using the predefined sending manner.

When waiting for receiving the data that the first UE forward by using the predefined sending manner, if the target UE receives the scheduling information that requires the base station to send the data to the target UE, the target UE may ignore the data forwarded by the first UE.

511. When the base station receives neither data acknowledgement information from the target UE nor data acknowledgement information from the transit UE, the base station re-executes a data sending process by using the implementation manner in Embodiment 3 or Embodiment 4.

After the base station sends the third scheduling information and the data to the group of UEs including the target UE and the transit UE, both the data received by the first UE and the data received by the target UE are incorrect, that is, the base station receives neither the ACK sent by the target UE nor the ACK sent by the first UE. In this case, the base station may use the data sending method provided in the above two embodiments to re-execute the sending process.

To sum up, according to the data sending method provided by this embodiment, by pre-storing data that needs to be sent to a target user equipment to a public logical channel buffer that is set for the target user equipment and a user equipment within a short-distance transmission range of the target user equipment, selecting a user equipment meeting a predefined condition as a transit user equipment, and then sending the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data. In addition, the base station in this embodiment further sends the data to the target user equipment. However, when the data received by the target user equipment is incorrect, the base station no longer schedules the transit user equipment to forward the received data to the target user equipment but forwards the data received by the transit user equipment to the target user equipment according to a default predefined sending method of the transit user equipment and the target user equipment, thereby achieving the effect that the transit user equipment can autonomously forward data.

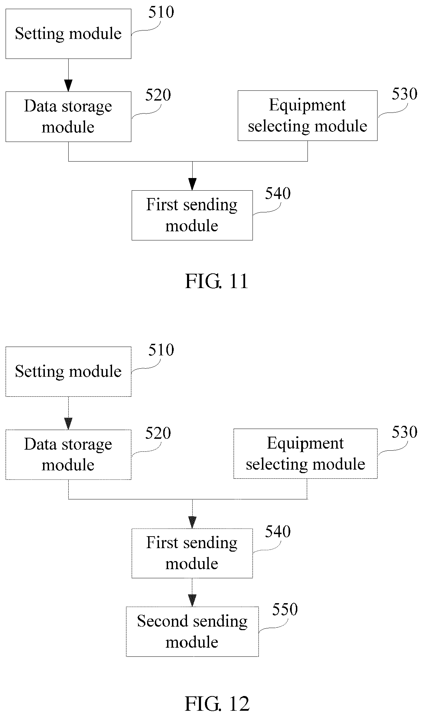

Refer to FIG. 11, which shows a structural block diagram of a base station according to another embodiment of the present invention, and the base station includes:
a setting module 510, configured to set a public logical channel buffer for the target user equipment and a user equipment within a short-distance transmission range of the target user equipment;
a data storage module 520, configured to pre-store data that needs to be sent to the target user equipment to the public logical channel buffer set by the setting module 510;
an equipment selecting module 530, configured to select a user equipment meeting a predefined condition from the user equipment within the short-distance transmission range of the target user equipments as a transit user equipment, where the predefined condition refers to at least one of the following conditions: a channel status is the best, a distance from the target user equipment is a predefined distance, and a currently used service type meets a predefined service type; and
a first sending module 540, configured to send the data stored in the data storage module 520 to at least the transit user equipment selected by the equipment selecting module 530, so that the transit user equipment forwards the data to the target user equipment.

In a first implementation manner of this embodiment,
the first sending module 540 is specifically configured to send first scheduling information and the data stored in the data storage module 520 to the transit user equipment selected by the equipment selecting module 530, where the first scheduling information and/or the data contains first indication information used to indicate that the data is data that needs to be forwarded, so that the transit user equipment receives the data according to the first scheduling information and buffers the data according to the first indication information.

In a second implementation manner of this embodiment,
the first indication information contained in the first scheduling information and the data that the first sending module sends includes:
an identifier of the target user equipment, which is stored in the first scheduling information, and a predefined identifier of redundant bit occupancy, which is stored in the data; or
a predefined identifier of redundant bit occupancy, which is stored in the first scheduling information, and an identifier of the target user equipment, which is stored in the data;
the first indication information contained in the first scheduling information that the first sending module sends includes:
   an identifier of the target user equipment, which is stored in the first scheduling information; or
   an identifier of the target user equipment and a predefined identifier of redundant bit occupancy, which are stored in the first scheduling information; or
   the first indication information of the data contained in the data that the first sending module sends, where the first indication information includes:
      a predefined identifier of redundant bit occupancy, which is stored in the data; or
      an identifier of the target user equipment and a predefined identifier of redundant bit occupancy, which are stored in the data.

Referring to FIG. 12, in a third implementation manner of this embodiment, the base station further includes:
a second sending module 550, configured to perform encryption by using the identifier of the target user equipment and send second scheduling information to the target user equipment and the transit user equipment selected by the equipment selecting module 530 at the same time, so that the transit user equipment receives the second scheduling information according to the identifier of the target user equipment and forwards the data to the target user equipment according to the received second scheduling information; and so that the target user equipment receives, according to the second scheduling information, the data forwarded by the transit user equipment.

In a fourth implementation manner of this embodiment,
the first sending module 540 is specifically configured to send third scheduling information and the data to a group of user equipments including the target user equipment and the transit user equipment, where the data contains an identifier of the target user equipment, an identifier of the transit user equipment, and second indication information, and the second indication information is used to distinguish the target user equipment from the transit user equipment, so that the group of user equipments receives the data according to the third scheduling information and buffers or discards the data according to whether the data contains their own identifier, where
the group of user equipments includes the target user equipment and the user equipments within the short-distance transmission range of the target user equipment.

In a fifth implementation manner of this embodiment,
the second indication information sent by the first sending module 540 includes a first predefined identifier of redundant bit occupancy corresponding to the identifier of the target user equipment and a second predefined identifier of redundant bit occupancy corresponding to the identifier of the transit user equipment, or includes a predefined arrangement or storage format of the identifier of the target user equipment and the identifier of the transit user equipment.

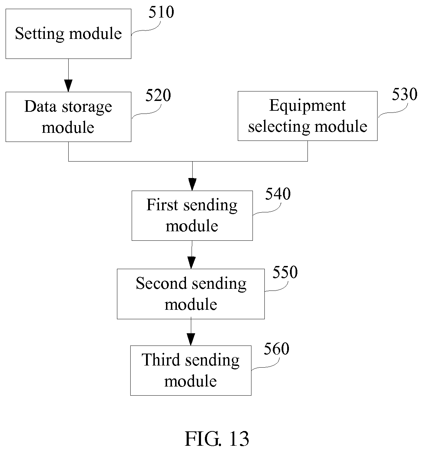

Referring to FIG. 13, in a sixth implementation manner of this embodiment, the base station further includes:
a third sending module 560, configured to perform encryption by using the identifier of the target user equipment and send second scheduling information to the target user equipment and the transit user equipment at the same time when no data acknowledgement information from the target user equipment is received but data acknowledgement information from the transit user equipment is received, so that the transit user equipment receives the second scheduling information according to the identifier of the target user equipment and forwards the data to the target user equipment according to the received second scheduling information; and so that the target user equipment receives, according to the second scheduling information, the data forwarded by the transit user equipment.

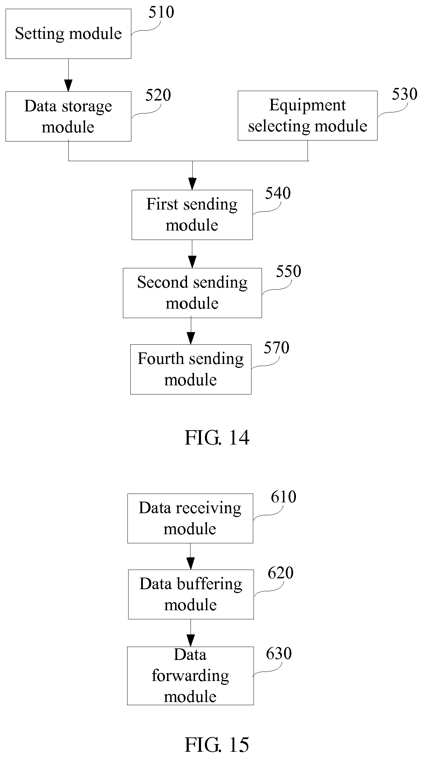

Referring to FIG. 14, the base station further includes:
a fourth sending module 570, configured to re-execute the step of sending third scheduling information and the data to a group of user equipments including the target user equipment and the transit user equipment when neither the data acknowledgement information from the target user equipment nor the data acknowledgement information from the transit user equipment is received.

To sum up, the base station provided by this embodiment pre-stores data that needs to be sent to a target user equipment to a public logical channel buffer that is set for the target user equipment and a user equipment within a short-distance transmission range of the target user equipment, selects a user equipment meeting a predefined condition as a transit user equipment, and then sends the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data.

Refer to FIG. 15, which shows a structural block diagram of a user equipment according to yet another embodiment of the present invention, and the user equipment includes:
a data receiving module 610, configured to receive data that a base station sends from a public logical channel buffer, where the data refers to data that needs to be sent to a target user equipment and the public logical channel buffer is set by the base station for the target user equipment and a user equipment within a short-distance transmission range of the target user equipment;
a data buffering module 620, configured to buffer the data received by the data receiving module 610; and
a data forwarding module 630, configured to forward the data buffered by the data buffering module 620 to the target user equipment.

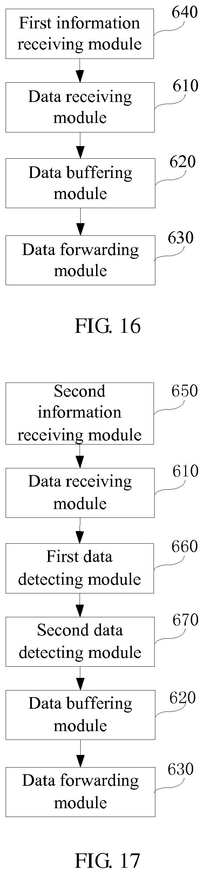

Referring to FIG. 16, in a first implementation manner of this embodiment, the user equipment further includes:
a first information receiving module 640, configured to receive first scheduling information that the base station sends, where
the data receiving module 610 is specifically configured to receive the data according to the first scheduling information that the first information receiving module 640 receives; and
the data buffering module 620 is configured to buffer the data according to first indication information contained in the first scheduling information that the first information receiving module 640 receives and/or in the data that the data receiving module 610 receives, where the first indication information is used to indicate that the data is data that needs to be forwarded.

In a second implementation manner of this embodiment,
the first indication information contained in the first scheduling information that the first information receiving module 640 receives and in the data that the data receiving module 610 receives includes:
an identifier of the target user equipment, which is stored in the first scheduling information, and a predefined identifier of redundant bit occupancy, which is stored in the data; or
a predefined identifier of redundant bit occupancy, which is stored in the first scheduling information, and an identifier of the target user equipment, which is stored in the data;
the first indication information in the first scheduling information that the first information receiving module 640 receives includes:
   an identifier of the target user equipment, which is stored in the first scheduling information; or
   an identifier of the target user equipment and a predefined identifier of redundant bit occupancy, which are stored in the first scheduling information; or
   the first indication information of the data contained in the data that the data receiving module 610 receives includes:
      a predefined identifier of redundant bit occupancy, which is stored in the data; or
      an identifier of the target user equipment and a predefined identifier of redundant bit occupancy, which are stored in the data.

Referring to FIG. 17, in a third implementation manner of this embodiment, the user equipment further includes a second information receiving module 650, a first data detecting module 660, and a second data detecting module 670, where
the second information receiving module 650 is configured to receive third scheduling information that the base station sends to a group of user equipments including the target user equipment and the transit user equipment;
the data receiving module 610 is specifically configured to receive the data according to the third scheduling information that the second information receiving module 640 receives, where the data contains an identifier of the transit user equipment, an identifier of the target user equipment, and second indication information, and the second indication information is used to distinguish the target user equipment from the transit user equipment;
the first data detecting module 660 is configured to detect whether the data that the data receiving module 610 receives contains its own identifier;
the second data detecting module 670 is configured to detect, if the first data detecting module 660 detects that the data contains its own identifier, according to the second indication information whether the data is data sent to itself; and
the data buffering module 620 is configured to buffer the data if the second data detecting module 670 detects that the data is data that is not sent to itself but needs to be forwarded, where
the group of user equipments includes the target user equipment and the user equipments within the short-distance transmission range of the target user equipment.

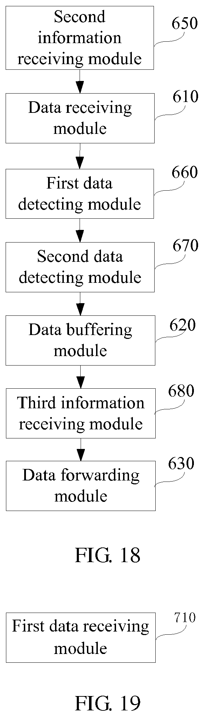

Referring to FIG. 18, in a fourth implementation manner of this embodiment, the user equipment further includes:
a third information receiving module 680, configured to receive, according to the identifier of the target user equipment, which is received by the first information receiving module 640 and/or the data receiving module 610, second scheduling information that the base station encrypts by using the identifier of the target user equipment and sends to the target user equipment and the transit user equipment at the same time, where
the data forwarding module 630 is specifically configured to forward the data to the target user equipment according to the second scheduling information that the third information receiving module 680 receives, so that the target user equipment receives the data according to the second scheduling information.

In a fifth implementation manner of this embodiment,
the data forwarding module 630 is specifically configured to forward the data to the target user equipment by using a predefined sending manner, so that the target user equipment receives the data according to the predefined sending manner, where
the predefined sending manner includes one of a predefined time bias, a frequency-domain location, and modulation coding manners, or a combination of the preceding manners.

To sum up, the user equipment provided by this embodiment receives and buffers, by receiving scheduling information that a base station sends, data that the base station sends from a public logical channel buffer, and forwards the received data to a target user equipment according to the scheduling of the base station or a predefined sending manner when the target user equipment receives no data or the received data is incorrect. This solves the problem in the prior art that a user equipment can buffer and forward data only according to cooperative information configured in data that a base station sends, thereby achieving the effect that the user equipment can implement data forwarding according to the scheduling of the base station.

Refer to FIG. 19, which shows a structural block diagram of a user equipment according to still another embodiment of the present invention, and the user equipment includes:
a first data receiving module 710, configured to receive data that a transit user equipment sends, where the data refers to data that a base station sends to at least the transit user equipment and that is stored in a public logical channel buffer of the base station and needs to be sent to a target user equipment;
where the transit equipment refers to a user equipment that meets a predefined condition and is selected from a user equipment within a short-distance transmission range of the target user equipment, where the predefined condition refers to at least one of the following conditions: a channel status is the best, a distance from the target user equipment is a predefined distance, and a currently used service type meets a predefined service type; and
the public logical channel buffer is set for the target user equipment and the user equipments within the short-distance transmission range of the target user equipment.

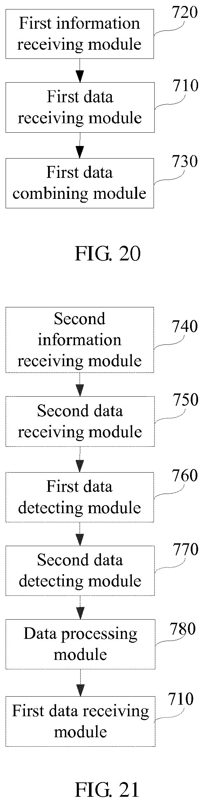

Referring to FIG. 20, in a first implementation manner of this embodiment, the user equipment further includes:
a first information receiving module 720, configured to receive second scheduling information that the base station sends, where
the first data receiving module 710 is configured to receive, according to the second scheduling information that the first information receiving module 720 receives, the data forwarded by the transit user equipment; and
a first data combining module 730, configured to perform a soft combination for the data that the base station sends and the data that the transit user equipment sends, which are received by the first data receiving module 710.

Referring to FIG. 21, in a second implementation manner of this embodiment, the user equipment further includes:
a second information receiving module 740, configured to receive third scheduling information that the base station sends to a group of user equipments including the target user equipment and the transit user equipment;
a second data receiving module 750, configured to receive, according to the third scheduling information that the second information receiving module 740 receives, the data that the base station sends, where the data contains an identifier of the transit user equipment, an identifier of the target user equipment, and second indication information, and the second indication information is used to distinguish the target user equipment from the transit user equipment;
a first data detecting module 760, configured to detect whether the data that the second data receiving module 750 receives contains its own identifier;
a second data detecting module 770, configured to detect, if the first data detecting module 760 detects that the data contains its own identifier, according to the second indication information whether the data is data sent to itself; and
a data processing module 780, configured to process the data if the second data detecting module 770 detects that the data is data sent to itself, where
the group of user equipments includes the target user equipment and the user equipments within the short-distance transmission range of the target user equipment.

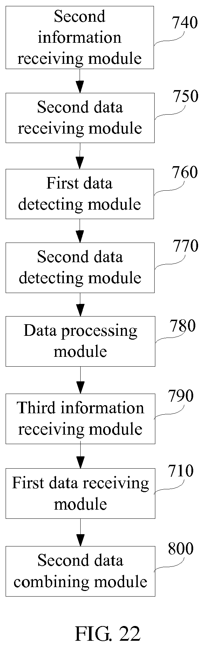

Referring to FIG. 22, in a third implementation manner of this embodiment, the user equipment further includes:
a third information receiving module 790, configured to receive, if the data received by the second data receiving module 750 is incorrect, the second scheduling information that the base station sends, where
the first data receiving module 710 is specifically configured to receive, according to the second scheduling information that the third information receiving module 790 receives, the data forwarded by the transit user equipment; and
a second data combining module 800, configured to perform a soft combination for the data that the base station sends and the data that the first data receiving module 710 receives and the transit user equipment sends.

In a fourth implementation manner of this embodiment,
the first data receiving module 710 is specifically configured to receive, if the data received by the second data receiving module 750 is incorrect, according to a predefined sending manner, the data that the transit user equipment sends, where
the predefined sending manner includes one of a predefined time bias, a frequency-domain location, and modulation coding manners, or a combination of the preceding manners.

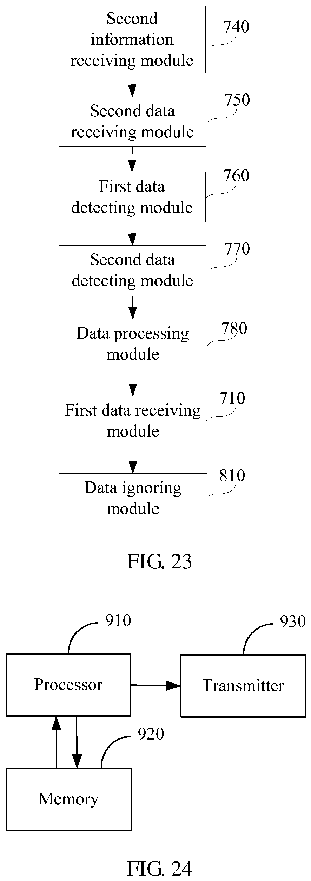

Referring to FIG. 23, in a fifth implementation manner of this embodiment, the user equipment further includes:
a data ignoring module 810, configured to ignore, if the data received by the second data module 750 is correct, the data that the transit user equipment forwards by using a predefined sending manner, where
the predefined sending manner includes one of a predefined time bias, a frequency-domain location, and modulation coding manners, or a combination of the preceding manners.

To sum up, the user equipment provided by this embodiment, by receiving scheduling information that a base station sends or by receiving, according to a predefined sending manner, data that a transit user equipment sends, solves the problem in the prior art that the user equipment can receive data only according to cooperative information in the data and when the received data is incorrect, cannot provide a feedback in real time to the transit user equipment or the base station requesting resending, thereby achieving the effect that a receiving result can be fed back to the base station in real time when the received data is incorrect.

Refer to FIG. 24, which shows a structural block diagram of a base station according to yet another embodiment of the present invention, and the base station includes:
a processor 910, configured to pre-store data that needs to be sent to a target user equipment to a public logical channel buffer in the base station, where the public logical channel buffer is set for the target user equipment and a user equipment within a short-distance transmission range of the target user equipment;
a memory 920, configured to store the data that needs to be sent to the target user equipment as the public logical channel buffer, where
the processor 910 is further configured to select a user equipment meeting a predefined condition from the user equipments within the short-distance transmission range of the target user equipment as a transit user equipment, where the predefined condition refers to at least one of the following conditions: a channel status is the best, a distance from the target user equipment is a predefined distance, and a currently used service type meets a predefined service type; and
a transmitter 930, configured to send the data in the public logical channel buffer to at least the transit user equipment, so that the transit user equipment forwards the data to the target user equipment.

In a first implementation manner of this embodiment,
the transmitter 930 is further configured to send first scheduling information and the data to the transit user equipment, where the first scheduling information and/or the data contains first indication information used to indicate that the data is data that needs to be forwarded, so that the transit user equipment receives the data according to the first scheduling information and buffers the data according to the first indication information.

In a second implementation manner of this embodiment,
the first indication information contained in the first scheduling information and the data that the transmitter 930 sends, where the first indication information includes:
an identifier of the target user equipment, which is stored in the first scheduling information, and a predefined identifier of redundant bit occupancy, which is stored in the data; or
a predefined identifier of redundant bit occupancy, which is stored in the first scheduling information, and an identifier of the target user equipment, which is stored in the data;
the first indication information contained in the first scheduling information that the transmitter 930 sends includes:
   an identifier of the target user equipment, which is stored in the first scheduling information; or
   an identifier of the target user equipment and a predefined identifier of redundant bit occupancy, which are stored in the first scheduling information; or
   the first indication information contained in the data that the transmitter 930 sends includes:
      a predefined identifier of redundant bit occupancy, which is stored in the data; or
      an identifier of the target user equipment and a predefined identifier of redundant bit occupancy, which are stored in the data.

In a third implementation manner of this embodiment,
the transmitter 930 is further configured to perform encryption by using the identifier of the target user equipment and send second scheduling information to the target user equipment and the transit user equipment at the same time, so that the transit user equipment receives the second scheduling information according to the identifier of the target user equipment and forwards the data to the target user equipment according to the received second scheduling information; and so that the target user equipment receives, according to the second scheduling information, the data forwarded by the transit user equipment.

In a fourth implementation manner of this embodiment,
the transmitter 930 is further configured to send third scheduling information and the data to a group of user equipments including the target user equipment and the transit user equipment, where the data contains an identifier of the target user equipment, an identifier of the transit user equipment, and second indication information, and the second indication information is used to distinguish the target user equipment from the transit user equipment, so that the group of user equipments receives the data according to the third scheduling information and buffers or discards the data according to whether the data contains their own identifier, where
the group of user equipments includes the target user equipment and the user equipments within the short-distance transmission range of the target user equipment.

In a fifth implementation manner of this embodiment,
the second indication information sent by the transmitter 930 includes a first predefined identifier of redundant bit occupancy corresponding to the identifier of the target user equipment and a second predefined identifier of redundant bit occupancy corresponding to the identifier of the transit user equipment; or the second indication information includes a predefined arrangement or storage format of the identifier of the target user equipment and the identifier of the transit user equipment.

In a sixth implementation manner of this embodiment,
the transmitter 930 is further configured to perform encryption by using the identifier of the target user equipment and send second scheduling information to the target user equipment and the transit user equipment at the same time when no data acknowledgement information from the target user equipment is received but data acknowledgement information from the transit user equipment is received, so that the transit user equipment receives the second scheduling information according to the identifier of the target user equipment and forwards the data to the target user equipment according to the received second scheduling information; and so that the target user equipment receives, according to the second scheduling information, the data forwarded by the transit user equipment; and
the transmitter 930 is further configured to re-execute the step of sending third scheduling information and the data to a group of user equipments including the target user equipment and the transit user equipment when neither the data acknowledgement information from the target user equipment nor the data acknowledgement information from the transit user equipment is received.

To sum up, the base station provided by this embodiment pre-stores data that needs to be sent to a target user equipment to a public logical channel buffer that is set for the target user equipment and a user equipment near the target user equipment, selects a user equipment meeting a predefined condition as a transit user equipment, and then sends the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data.

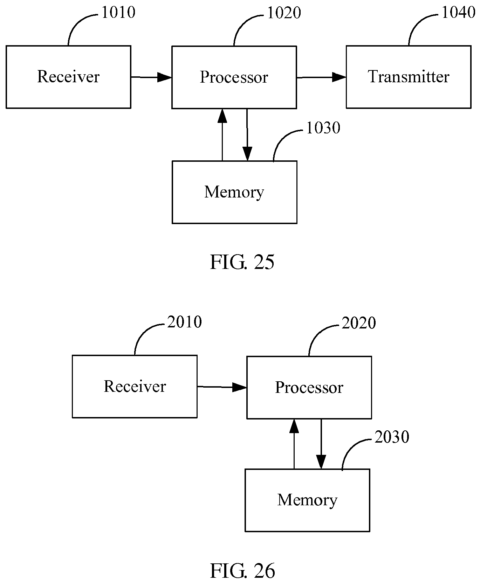

Refer to FIG. 25, which shows a structural block diagram of a user equipment according to still another embodiment of the present invention, and the user equipment includes:
a receiver 1010, configured to receive data that a base station sends from a public logical channel buffer, where the data refers to data that needs to be sent to a target user equipment and the public logical channel buffer is set by the base station for the target user equipment and a user equipment within a short-distance transmission range of the target user equipment;
a processor 1020, configured to store the data received by the receiver 1010 to a memory 1030;
the memory 1030, configured to buffer the data received by the receiver 1010; and
a transmitter 1040, configured to forward the data stored in the memory 1030 to the target user equipment.

In a first implementation manner of this embodiment,
the receiver 1010 is further configured to receive first scheduling information that the base station sends, and receive the data according to the first scheduling information, and buffer the data according to first indication information, in the first scheduling information and/or the data, used to indicate that the data is data that needs to be forwarded.

In a second implementation manner of this embodiment,
the first indication information contained in the first scheduling information and the data that the receiver 1010 receives includes:
an identifier of the target user equipment, which is stored in the first scheduling information, and a predefined identifier of redundant bit occupancy, which is stored in the data; or
a predefined identifier of redundant bit occupancy, which is stored in the first scheduling information, and an identifier of the target user equipment, which is stored in the data;
the first indication information contained in the first scheduling information that the receiver 1010 receives includes:
   an identifier of the target user equipment, which is stored in the first scheduling information; or
   an identifier of the target user equipment and a predefined identifier of redundant bit occupancy, which are stored in the first scheduling information; or
   the first indication information contained in the data that the receiver 1010 receives, where the first indication information includes:
      a predefined identifier of redundant bit occupancy, which is stored in the data; or
      an identifier of the target user equipment and the predefined identifier of redundant bit occupancy, which are stored in the data.

In a third implementation manner of this embodiment,
the receiver 1010 is further configured to receive third scheduling information that the base station sends to a group of user equipments including the target user equipment and the transit user equipment, and receive the data according to the third scheduling information, where the data contains an identifier of the transit user equipment, an identifier of the target user equipment and second indication information, and the second indication information is used to distinguish the target user equipment from the transit user equipment; and
the processor 1020 is further configured to detect, if it is detected that the data contains its own identifier, whether the data contains its own identifier, according to the second indication information detect whether the data is data sent to itself, and buffer the data if the data is data that is not sent to itself but needs to be forwarded, where
the group of user equipments includes the target user equipment and the user equipments within the short-distance transmission range of the target user equipment.

In a fourth implementation manner of this embodiment,
the receiver 1010 is further configured to receive, according to the identifier of the target user equipment, second scheduling information that the base station encrypts by using the identifier of the target user equipment and sends to the target user equipment and the transit user equipment at the same time; and
the transmitter 1040 is further configured to forward the data to the target user equipment according to the second scheduling information, so that the target user equipment receives the data according to the second scheduling information.

In a fifth implementation manner of this embodiment,
the transmitter 1040 is further configured to forward the data to the target user equipment by using a predefined sending manner, so that the target user equipment receives the data according to the predefined sending manner, where
the predefined sending manner includes one of a predefined time bias, a frequency-domain location, and modulation coding manners, or a combination of the preceding manners.

To sum up, the user equipment provided by this embodiment receives and buffers, by receiving scheduling information that a base station sends, data that the base station sends from a public logical channel buffer, and forwards the received data to a target user equipment according to the scheduling of the base station or a predefined sending manner when the target user equipment receives no data or the received data is incorrect. This solves the problem in the prior art that the user equipment can buffer and forward data only according to cooperative information configured in the data that the base station sends, thereby achieving the effect that the user equipment can implement data forwarding according to the scheduling of the base station.

Refer to FIG. 26, which shows a structural block diagram of a user equipment according to yet another embodiment of the present invention, and the user equipment includes:
a receiver 2010, configured to receive data that a transit user equipment sends, where the data refers to data that a base station sends to at least the transit user equipment and that is stored in a public logical channel buffer of the base station and needs to be sent to a target user equipment;
a processor 2020, configured to store, to a memory 2030, the data that the receiver 2010 receives and the transit user equipment sends; and
the memory 2030, configured to store the data that the receiver 2010 receives and the transit user equipment sends.

The transit equipment refers to a user equipment that meets a predefined condition and is selected from a user equipment within a short-distance transmission range of the target user equipment, where the predefined condition refers to at least one of the following conditions: a channel status is the best, a distance from the target user equipment is a predefined distance, and a currently used service type meets a predefined service type; and
the public logical channel buffer is set for the target user equipment and the user equipments within the short-distance transmission range of the target user equipment.

In a first implementation manner of this embodiment,
the receiver 2010 is further configured to receive second scheduling information that the base station sends, and receive, according to the second scheduling information, the data forwarded by the transit user equipment; and
the processor 2020 is configured to perform a soft combination for the received data that the base station sends and the received data that the transit user equipment sends.

In a second implementation manner of this embodiment,
the receiver 2010 is further configured to receive third scheduling information that the base station sends to a group of user equipments including the target user equipment and the transit user equipment, and receive, according to the third scheduling information, the data that the base station sends, where the data contains an identifier of the transit user equipment, an identifier of the target user equipment and second indication information, and the second indication information is used to distinguish the target user equipment from the transit user equipment; and
the processor 2020 is further configured to detect whether the data contains its own identifier, detect, if it is detected that the data contains its own identifier, according to the second indication information whether the data is data sent to itself, and process the data if the data is data sent to itself, where
the group of user equipments includes the target user equipment and the user equipments within the short-distance transmission range of the target user equipment.

In a third implementation manner of this embodiment,
the receiver 2010 is further configured to receive, if the data is incorrectly received, the second scheduling information that the base station sends, and receive, according to the second scheduling information, the data forwarded by the transit user equipment; and
the processor 2020 is further configured to perform a soft combination for the received data that the base station sends and the received data that the transit user equipment sends.

In a fourth implementation manner of this embodiment,
the receiver 2010 is further configured to receive, according to a predefined sending manner, the data that the transit user equipment sends, where
the predefined sending manner includes one of a predefined time bias, a frequency-domain location, and modulation coding manners, or a combination of the preceding manners.

In a fifth implementation manner of this embodiment,
the processor 2020 is further configured to ignore, if the data is correctly received, the data that the transit user equipment forwards by using a predefined sending manner, where
the predefined sending manner includes one of a predefined time bias, a frequency-domain location, and modulation coding manners, or a combination of the preceding manners.

To sum up, the user equipment provided by this embodiment, by receiving scheduling information that a base station sends or by receiving, according to a predefined sending manner, data that a transit user equipment sends, solves the problem in the prior art that the user equipment can receive data only according to cooperative information in the data and when the received data is incorrect, cannot provide a feedback in real time to the transit user equipment or the base station requesting resending, thereby achieving the effect that a receiving result can be fed back to the base station in real time when the received data is incorrect.

Still another embodiment of the present invention provides a data receiving system. The system includes: the base station 3010 in any one of FIG. 12 to FIG. 14 or FIG. 24, the transit user equipment 3020 in any one of FIG. 15 to FIG. 18 or FIG. 25, and the target user equipment 3030 in any one of FIG. 19 to FIG. 22 or FIG. 26. For detailed descriptions, refer to the corresponding embodiments, which will not be repeatedly described herein.

To sum up, the system provided by this embodiment pre-stores data that needs to be sent to a target user equipment to a public logical channel buffer that is set for the target user equipment and a user equipment near the target user equipment, selects a user equipment meeting a predefined condition as a transit user equipment, and then sends the data in the public logical channel buffer to at least the transit user equipment, so that the transit user equipment forwards the received data to the target user equipment. This solves the problem in the prior art that the size of data that a base station distributes to a logical channel buffer corresponding to each user equipment for buffering cannot precisely match the size of data that the base station needs to schedule and send to the user equipment in an actual sending process and therefore low data transmission efficiency is caused due to unreasonable pre-distribution, thereby achieving the effect that the base station buffers all the data to be sent to the target user equipment in the public logical channel buffer, so that the data can be directly obtained from the public logical channel buffer and sent to the selected transit user equipment during sending of each frame of data.

The sequence numbers of the above embodiments of the present invention are used merely for description, and do not represent the preference of the embodiments.

A person of ordinary skill in the art may understand that all or a part of the steps of the foregoing embodiments may be implemented by hardware, or may be implemented by a program instructing relevant hardware. The program may be stored in a computer readable storage medium. The storage medium may be a read-only memory, a magnetic disk, an optical disc, or the like.

The foregoing descriptions are merely exemplary embodiments of the present invention, but are not intended to limit the present invention. Any modification, equivalent replacement, or improvement made within the principle of the present invention shall fall within the protection scope of the present invention.

## Claims

1. A data sending method, comprising:
pre-storing (101), by a base station, data that needs to be sent to a target user equipment to a public logical channel buffer in the base station, wherein the public logical channel buffer is set for the target user equipment and user equipments within a short-distance transmission range of the target user equipment;
selecting (102), by a base station, a user equipment meeting a predefined condition from user equipments within a transmission range of a target user equipment as a transit user equipment, wherein the predefined condition refers to at least one of the following conditions: a channel status is the best according to a measured channel status information, a distance from the target user equipment is a predefined distance, and a currently used service type meets a predefined service type;
sending (103), by the base station, first scheduling information to the transit user equipment; and
sending (103), by the base station, data in the public logical channel buffer to the transit user equipment, the data being forwarded by the transit user equipment to the target user equipment, wherein the sending (103) comprises sending according to the first scheduling information the data to the transit user equipment, wherein the first scheduling information and/or the data contains first indication information used to indicate that the data is data that needs to be forwarded,
**characterized in that** after the sending (103), by the base station, the data in the public logical channel buffer to at least the transit user equipment, the method further comprises:
performing, by the base station, encryption by using an identifier of the target user equipment to encrypt second scheduling information and sending the encrypted second scheduling information to the target user equipment and the transit user equipment at the same time for forwarding the data to the target user equipment.

2. The data sending method according to claim 1, wherein:
if the first scheduling information and the data contain the first indication information used to indicate that the data is data that needs to be forwarded, the first indication information comprises: an identifier of the target user equipment, which is stored in the first scheduling information; or an identifier of the target user equipment, which is stored in the data;
if the first scheduling information contains the first indication information used to indicate that the data is data that needs to be forwarded, the first indication information comprises: an identifier of the target user equipment, which is stored in the first scheduling information; or
if the data contains the first indication information used to indicate that the data is data that needs to be forwarded, the first indication information comprises: an identifier of the target user equipment which is stored in the data.

3. A data forwarding method, comprising:
receiving (302), by a transit UE, first scheduling information from a base station;
receiving (303), from the base station by the transit UE, data according to the first scheduling information and buffering the data according to first indication information, in the first scheduling information and/or the data, and used to indicate that the data is data that needs to be forwarded, wherein the data is sent by the base station from a public logical channel buffer and the public logical channel buffer is set by the base station for the target user equipment and a user equipment within a short-distance transmission range of the target user equipment; and
forwarding (307), by the transit UE, the data to the target user equipment,
**characterized in that** before the forwarding the data to the target user equipment, the method further comprises:
receiving, by the transit UE, second scheduling information from a base station,
wherein the second scheduling information is encrypted by the base station by using an identifier of the target user equipment; and
the forwarding the data to the target user equipment comprises:
forwarding, by the transit UE, the data to the target user equipment according to the second scheduling information, so that the target user equipment receives the data according to the second scheduling information.

4. The data forwarding method according to claim 3, wherein before the receiving and buffering (303), by the transit UE, data that a base station sends from a public logical channel buffer, the method further comprises:
receiving (302), by the transit UE, first scheduling information that the base station sends; and
the receiving and buffering (303), by the transit UE, data that a base station sends from a public logical channel buffer comprises:
receiving, by the transit UE, the data according to the first scheduling information and buffering the data according to first indication information, in the first scheduling information and/or the data, used to indicate that the data is data that needs to be forwarded.

5. The data forwarding method according to claim 4, wherein: if the first scheduling information and the data contain the first indication information used to indicate that the data is data that needs to be forwarded, the first indication information comprises:
an identifier of the target user equipment, which is stored in the first scheduling information; or
an identifier of the target user equipment, which is stored in the data; if the first scheduling information contains the first indication information used to indicate that the data is data that needs to be forwarded, the first indication information comprises:
an identifier of the target user equipment, which is stored in the first scheduling information; or
if the data contains the first indication information used to indicate that the data is data that needs to be forwarded, the first indication information comprises: an identifier of the target user equipment which is stored in the data.

6. The data forwarding method according to claim 3, wherein before the receiving and buffering (303), by the transit UE, data that a base station sends from a public logical channel buffer, the method further comprises:
receiving, by the transit UE, third scheduling information that the base station sends to a group of user equipments comprising the target user equipment and a transit user equipment; and
the receiving and buffering, by the transit UE, data that a base station sends from a public logical channel buffer comprises:
receiving, by the transit UE, the data according to the third scheduling information, wherein the data contains an identifier of the transit user equipment, an identifier of the target user equipment, and second indication information, and the second indication information is used to distinguish the target user equipment from the transit user equipment;
detecting, by the transit UE, whether the data contains its own identifier;
detecting, by the transit UE, if it is detected that the data contains its own identifier,
according to the second indication information whether the data is data sent to itself; and
buffering, by the transit UE, the data if the data is data that is not sent to itself but needs to be forwarded, wherein
the group of user equipments comprises the target user equipment and the user equipments within the short-distance transmission range of the target user equipment.

7. A base station, comprising:
a setting module (510), configured to set a public logical channel buffer for a target user equipment and user equipments within a short-distance transmission range of the target user equipment;
a data storage module (520), configured to pre-store data that needs to be sent to the target user equipment to the public logical channel buffer set by the setting module (510);
an equipment selecting module (530), configured to select a user equipment meeting a predefined condition from user equipments within a transmission range of the target user equipment as a transit user equipment, wherein the predefined condition refers to at least one of the following conditions: a channel status is the best according to a measured channel status information, a distance from the target user equipment is a predefined distance, and a currently used service type meets a predefined service type; and
a first sending module (540), configured to send first scheduling information to the transit user equipment, the first sending module (540) configured to send data according to the first scheduling information to the transit user equipment selected by the equipment selecting module (530), the data to be forwarded by the transit user equipment to the target user equipment, wherein the first scheduling information and/or the data contains first indication information used to indicate that the data is data that needs to be forwarded,
**characterized in that** the base station further comprises:
a second sending module, configured to perform encryption by using the identifier of the target user equipment to encrypt second scheduling information and send the encrypted second scheduling information to the target user equipment and the transit user equipment selected by the equipment selecting module at the same time, so that the transit user equipment receives the second scheduling information and forwards the data to the target user equipment according to the received second scheduling information; and so that the target user equipment receives, according to the second scheduling information, the data forwarded by the transit user equipment.

8. The base station according to claim 7, wherein:
the first sending module (540) is specifically configured to send first scheduling information and the data stored in the data storage module to the transit user equipment selected by the equipment selecting module (530), wherein the first scheduling information and/or the data contains first indication information used to indicate that the data is data that needs to be forwarded.

9. The base station according to claim 8, wherein the first indication information contained in the first scheduling information and the data that the first sending module (540) sends comprises:
an identifier of the target user equipment, which is stored in the first scheduling information; or
an identifier of the target user equipment, which is stored in the data; or
the first indication information contained in the first scheduling information that the first sending module (540) sends comprises:
an identifier of the target user equipment, which is stored in the first scheduling information; or
the first indication information of the data contained in the data that the first sending module (540) sends comprises:
an identifier of the target user equipment which is stored in the data.

10. A transit user equipment, comprising:
a first information receiving module (640), configured to receive first scheduling information sent by a base station,
a data receiving module (610), configured to receive data according to the first scheduling information, wherein the data is sent by a base station from a public logical channel buffer, wherein the data refers to data that needs to be sent to a target user equipment and the public logical channel buffer is set by the base station for the target user equipment and a user equipment within a short-distance transmission range of the target user equipment;
a data buffering module (620), configured to buffer the data received by the data receiving module (610) according to first indication information contained in the first scheduling information and/or in the data, wherein the first indication information is used to indicate that the data is data that needs to be forwarded; and
a data forwarding module (630), configured to forward the data buffered by the data buffering module (620) to the target user equipment,
**characterized in that** the receiver is further configured to receive, second scheduling information from a base station, wherein the second scheduling information is encrypted by the base station by using the identifier of the target user equipment and the second scheduling information is sent by the base station to the target user equipment and the transit user equipment at the same time; and
the transmitter is further configured to forward the data to the target user equipment according to the second scheduling information, so that the target user equipment receives the data according to the second scheduling information.

11. The user equipment according to claim 10, wherein the user equipment further comprises:
a first information receiving module (640), configured to receive first scheduling information sent by the base station, wherein
the data receiving module(610) is specifically configured to receive the data according to the first scheduling information that the first information receiving module (640) receives; and
the data buffering module (620) is configured to buffer the data according to first indication information contained in the first scheduling information that the first information receiving module (640) receives and/or in the data that the data receiving module (610) receives, wherein the first indication information is used to indicate that the data is data that needs to be forwarded.

12. The user equipment according to claim 11, wherein:
the first indication information contained in the first scheduling information that the first information receiving module (640) receives and in the data that the data receiving module (610) receives comprises:
an identifier of the target user equipment, which is stored in the first scheduling information; or
an identifier of the target user equipment, which is stored in the data;
the first indication information in the first scheduling information that the first information receiving module (640) receives comprises:
an identifier of the target user equipment, which is stored in the first scheduling information; or
the first indication information of the data contained in the data that the data receiving module (610) receives comprises:
an identifier of the target user equipment.

13. The user equipment according to claim 11, wherein the user equipment further comprises a second information receiving module (650), a first data detecting module (660), and a second data detecting module (670), wherein
the second information receiving module (650) is configured to receive third scheduling information that the base station sends to a group of user equipments comprising the target user equipment and a transit user equipment;
the data receiving module (610) is specifically configured to receive the data according to the third scheduling information that the second information receiving module (650) receives, wherein the data contains an identifier of the transit user equipment, an identifier of the target user equipment, and second indication information, and the second indication information is used to distinguish the target user equipment from the transit user equipment;
the first data detecting module (660) is configured to detect whether the data that the data receiving module (610) receives contains its own identifier;
the second data detecting module (670) is configured to detect, if the first data detecting module (660) detects that the data contains its own identifier, according to the second indication information whether the data is data sent to itself; and
the data buffering module (620) is configured to buffer the data if the second data detecting module (670) detects that the data is data that is not sent to itself but needs to be forwarded, wherein
the group of user equipments comprises the target user equipment and the user equipments within the short-distance transmission range of the target user equipment.

## Patentansprüche

1. Datensendeverfahren, umfassend:
Vorspeichern (101) von Daten, die zu einem Ziel-Benutzer-Equipment gesendet werden sollen, durch eine Basisstation zu einem öffentlichen logischen Kanalpuffer in der Basisstation, wobei der öffentliche logische Kanalpuffer eingerichtet ist für das Ziel-Benutzer-Equipment und Benutzer-Equipments innerhalb eines Kurzstrecken-Übertragungsbereichs des Ziel-Benutzer-Equipments;
Auswählen (102) eines Benutzer-Equipments, das eine vordefinierte Bedingung erfüllt, durch die Basisstation unter Benutzer-Equipments innerhalb eines Übertragungsbereichs eines Ziel-Benutzer-Equipments als Transit-Benutzer-Equipment, wobei sich die vordefinierte Bedingung auf mindestens eine der folgenden Bedingungen bezieht: ein Kanalstatus ist der beste entsprechend einer gemessenen Kanalstatusinformation, eine Distanz vom Ziel-Benutzer-Equipment ist eine vordefinierte Distanz, und ein derzeit verwendeter Diensttyp entspricht einem vordefinierten Diensttyp;
Senden (103) einer ersten Zeitplanungsinformation durch die Basisstation zum Transit-Benutzer-Equipment; und
Senden (103) von Daten im öffentlichen logischen Kanalpuffer durch die Basisstation zum Transit-Benutzer-Equipment, wobei die Daten durch das Transit-Benutzer-Equipment zum Ziel-Benutzer-Equipment weitergeleitet werden, wobei das Senden (103) das Senden entsprechend der ersten Zeitplanungsinformation der Daten zum Transit-Benutzer-Equipment umfasst, wobei die erste Zeitplanungsinformation und/oder die Daten eine erste Angabeinformation enthalten, die verwendet wird, um anzugeben, dass die Daten Daten sind, die weitergeleitet werden sollen,
**dadurch gekennzeichnet, dass** das Verfahren nach dem Senden (103) der Daten im öffentlichen logischen Kanalpuffer durch die Basisstation mindestens zu dem Transit-Benutzer-Equipment ferner umfasst:
Durchführung von Verschlüsselung durch die Basisstation unter Verwendung einer Kennung des Ziel-Benutzer-Equipments zum Verschlüsseln einer zweiten Zeitplanungsinformation und gleichzeitiges Senden der verschlüsselten zweiten Zeitplanungsinformation zum Ziel-Benutzer-Equipment und zum Transit-Benutzer-Equipment zum Weiterleiten der Daten zum Ziel-Benutzer-Equipment.

2. Datensendeverfahren nach Anspruch 1, wobei,
falls die erste Zeitplanungsinformation und die Daten die erste Angabeinformation enthalten, die verwendet wird, um anzugeben, dass die Daten Daten sind, die weitergeleitet werden sollen, die erste Angabeinformation umfasst: eine Kennung des Ziel-Benutzer-Equipments, die in der ersten Zeitplanungsinformation gespeichert ist, oder eine Kennung des Ziel-Benutzer-Equipments, die in den Daten gespeichert ist; falls die erste Zeitplanungsinformation die erste Angabeinformation enthält, die verwendet wird, um anzugeben, dass die Daten Daten sind, die weitergeleitet werden sollen, die erste Angabeinformation umfasst: eine Kennung des Ziel-Benutzer-Equipments, die in der ersten Zeitplanungsinformation gespeichert ist; oder falls die Daten die erste Angabeinformation enthalten, die verwendet wird, um anzugeben, dass die Daten Daten sind, die weitergeleitet werden sollen, die erste Angabeinformation umfasst: eine Kennung des Ziel-Benutzer-Equipments, die in den Daten gespeichert ist.

3. Datenweiterleitungsverfahren, umfassend:
Empfangen (302) einer ersten Zeitplanungsinformation von einer Basisstation durch ein Transit-UE;
Empfangen (303), durch das Transit-UE von der Basisstation, von Daten entsprechend der ersten Zeitplanungsinformation und Puffern der Daten entsprechend der ersten Angabeinformation in der ersten Zeitplanungsinformation und/oder den Daten, verwendet zum Angeben, dass die Daten Daten sind, die weitergeleitet werden sollen, wobei die Daten durch die Basisstation aus einem öffentlichen logischen Kanalpuffer gesendet werden und der öffentliche logische Kanalpuffer durch die Basisstation für das Ziel-Benutzer-Equipment und ein Benutzer-Equipment in einem Kurzstrecken-Übertragungsbereich des Ziel-Benutzer-Equipments eingerichtet werden; und
Weiterleiten (307) der Daten durch das Transit-UE zum Ziel-Benutzer-Equipment,
**dadurch gekennzeichnet, dass** das Verfahren vor dem Weiterleiten der Daten zum Ziel-Benutzer-Equipment ferner umfasst:
Empfangen einer zweiten Zeitplanungsinformation von einer Basisstation durch das Transit-UE,
wobei die zweite Zeitplanungsinformation durch die Basisstation unter Verwendung einer Kennung des Ziel-Benutzer-Equipments verschlüsselt wird; und
das Weiterleiten der Daten zum Ziel-Benutzer-Equipment umfasst:
Weiterleiten der Daten durch das Transit-UE zum Ziel-Benutzer-Equipment entsprechend der zweiten Zeitplanungsinformation, sodass das Ziel-Benutzer-Equipment die Daten entsprechend der zweiten Zeitplanungsinformation empfängt.

4. Datenweiterleitungsverfahren nach Anspruch 3, wobei das Verfahren vor dem Empfangen und Puffern (303), durch das Transit-UE, von Daten, die eine Basisstation aus einem öffentlichen logischen Kanalpuffer sendet, ferner umfasst:
Empfangen (302), durch das Transit-UE, einer ersten Zeitplanungsinformation, die die Basisstation sendet; und
das Empfangen und Puffern (303), durch das Transit-UE, von Daten, die eine Basisstation aus einem öffentlichen logischen Kanalpuffer sendet, umfasst:
Empfangen der Daten gemäß der ersten Zeitplanungsinformation durch das Transit-UE und Puffern der Daten gemäß der ersten Angabeinformation in der ersten Zeitplanungsinformation und/oder den Daten, die verwendet werden, um anzugeben, dass die Daten Daten sind, die weitergeleitet werden sollen.

5. Datenweiterleitungsverfahren nach Anspruch 4, wobei,
falls die erste Zeitplanungsinformation und die Daten die erste Angabeinformation enthalten, die verwendet wird, um anzugeben, dass die Daten Daten sind, die weitergeleitet werden sollen, die erste Angabeinformation umfasst:
eine Kennung des Ziel-Benutzer-Equipments, die in der ersten Zeitplanungsinformation gespeichert ist, oder eine Kennung des Ziel-Benutzer-Equipments, die in den Daten gespeichert ist;
falls die erste Zeitplanungsinformation die erste Angabeinformation enthält, die verwendet wird, um anzugeben, dass die Daten Daten sind, die weitergeleitet werden sollen, die erste Angabeinformation umfasst:
eine Kennung des Ziel-Benutzer-Equipments, die in der ersten Zeitplanungsinformation gespeichert ist; oder
falls die Daten die erste Angabeinformation enthalten, die verwendet wird, um anzugeben, dass die Daten Daten sind, die weitergeleitet werden sollen, die erste Angabeinformation umfasst:
eine Kennung des Ziel-Benutzer-Equipments, die in den Daten gespeichert ist.

6. Datenweiterleitungsverfahren nach Anspruch 3, wobei das Verfahren vor dem Empfangen und Puffern (303), durch das Transit-UE, von Daten, die eine Basisstation aus einem öffentlichen logischen Kanalpuffer sendet, ferner umfasst:
Empfangen, durch das Transit-UE, einer dritten Zeitplanungsinformation, die die Basisstation zu einer Gruppe von Benutzer-Equipments sendet, umfassend das Ziel-Benutzer-Equipment und ein Transit-Benutzer-Equipment; und
das Empfangen und Puffern, durch das Transit-UE, von Daten, die eine Basisstation aus einem öffentlichen logischen Kanalpuffer sendet, umfasst:
Empfangen der Daten durch das Transit-UE entsprechend der dritten Zeitplanungsinformation, wobei die Daten eine Kennung des Transit-Benutzer-Equipments, eine Kennung des Ziel-Benutzer-Equipments und eine zweite Angabeinformation enthalten und die zweite Angabeinformation verwendet wird, um das Ziel-Benutzer-Equipment vom Transit-Benutzer-Equipment zu unterscheiden;
Detektieren durch das Transit-UE, ob die Daten ihre eigene Kennung enthalten;
falls detektiert wird, dass die Daten ihre eigene Kennung enthalten, Detektieren durch das Transit-UE entsprechend der zweiten Angabeinformation, ob die Daten an sich selbst gesendet werden;
und
Puffern der Daten durch das Transit-UE, falls die Daten Daten sind, die nicht an sich selbst gesendet werden, sondern weitergeleitet werden sollen, wobei die Gruppe von Benutzer-Equipments das Ziel-Benutzer-Equipment und die Benutzer-Equipments im Kurzstrecken-Übertragungsbereich des Ziel-Benutzer-Equipments umfasst.

7. Basisstation, umfassend:
ein Einstellmodul (510), ausgelegt zum Einrichten eines öffentlichen logischen Kanalpuffers für ein Ziel-Benutzer-Equipment und Benutzer-Equipments in einem Kurzstrecken-Übertragungsbereich des Ziel-Benutzer-Equipments;
ein Datenspeichermodul (520), ausgelegt zum Vorspeichern von Daten, die zum Ziel-Benutzer-Equipment in den öffentlichen logischen Kanalpuffer gesendet werden sollen, der durch das Einstellmodul (510) eingerichtet wird;
ein Equipment-Auswahlmodul (530), ausgelegt zum Auswählen eines Benutzer-Equipments, dass eine vordefinierte Bedingung erfüllt, unter Benutzer-Equipments in einem Übertragungsbereich des Ziel-Benutzer-Equipments als ein Transit-Benutzer-Equipment, wobei sich die vordefinierte Bedingung auf mindestens eine der folgenden Bedingungen bezieht: ein Kanalstatus ist der beste entsprechend einer gemessenen Kanalstatusinformation, eine Distanz vom Ziel-Benutzer-Equipment ist eine vordefinierte Distanz, und ein derzeit verwendeter Diensttyp entspricht einem vordefinierten Diensttyp;
und
ein erstes Sendemodul (540), ausgelegt zum Senden einer ersten Zeitplanungsinformation zum Transit-Benutzer-Equipment, wobei das erste Sendemodul (540) ausgelegt ist zum Senden von Daten entsprechend der ersten Zeitplanungsinformation zum durch das Equipment-Auswahlmodul (530) ausgewählten Transit-Benutzer-Equipment; die Daten durch das Transit-Benutzer-Equipment zum Ziel-Benutzer-Equipment weitergeleitet werden sollen, wobei die erste Zeitplanungsinformation und/oder die Daten eine erste Angabeinformation enthalten, die verwendet wird, um anzugeben, dass die Daten Daten sind, die weitergeleitet werden sollen,
**dadurch gekennzeichnet, dass** die Basisstation ferner umfasst:
ein zweites Sendemodul, ausgelegt zum Durchführen von Verschlüsselung unter Verwendung der Kennung des Ziel-Benutzer-Equipments zum Verschlüsseln einer zweiten Zeitplanungsinformation und zum gleichzeitigen Senden der verschlüsselten zweiten Zeitplanungsinformation zum Ziel-Benutzer-Equipment und zum durch das Equipment-Auswahlmodul ausgewählten Transit-Benutzer-Equipment, sodass das Transit-Benutzer-Equipment die zweite Zeitplanungsinformation empfängt und die Daten zum Ziel-Benutzer-Equipment entsprechend der empfangenen zweiten Zeitplanungsinformation weiterleitet und das Ziel-Benutzer-Equipment entsprechend der zweiten Zeitplanungsinformation die durch das Transit-Benutzer-Equipment weitergeleiteten Daten empfängt.

8. Basisstation nach Anspruch 7, wobei
das erste Sendemodul (540) im Einzelnen ausgelegt ist zum Senden einer ersten Zeitplanungsinformation und den im Datenspeichermodul gespeicherten Daten zum durch das Equipment-Auswahlmodul (530) ausgewählten Transit-Benutzer-Equipment, wobei die erste Zeitplanungsinformation und/oder die Daten eine erste Angabeinformation enthalten, die verwendet wird, um anzugeben, dass die Daten Daten sind, die weitergeleitet werden sollen.

9. Basisstation nach Anspruch 8, wobei die in der ersten Zeitplanungsinformation enthaltene erste Angabeinformation und die Daten, die das erste Sendemodul (540) sendet, umfassen:
eine Kennung des Ziel-Benutzer-Equipments, die in der ersten Zeitplanungsinformation gespeichert ist; oder
eine Kennung des Ziel-Benutzer-Equipments, die in den Daten gespeichert ist; oder
die in der ersten Zeitplanungsinformation, die das erste Sendemodul (540) sendet, enthaltene erste Angabeinformation umfasst:
eine Kennung des Ziel-Benutzer-Equipments, die in der ersten Zeitplanungsinformation gespeichert ist; oder
die erste Angabeinformation der in den Daten, die das erste Sendemodul (540) sendet, enthaltenen Daten umfasst:
eine Kennung des Ziel-Benutzer-Equipments, die in den Daten gespeichert ist.

10. Transit-Benutzer-Equipment, umfassend:
ein erstes Informationsempfangsmodul (640) ausgelegt zum Empfangen einer durch eine Basisstation gesendeten ersten Zeitplanungsinformation,
ein Datenempfangsmodul (610), ausgelegt zum Empfangen von Daten entsprechend der ersten Zeitplanungsinformation, wobei die Daten durch eine Basisstation aus einem öffentlichen logischen Kanalpuffer gesendet werden, wobei sich die Daten auf Daten beziehen, die zu einem Ziel-Benutzer-Equipment gesendet werden sollen, und der öffentliche logische Kanalpuffer durch die Basisstation für das Ziel-Benutzer-Equipment und ein Benutzer-Equipment in einem Kurzstrecken-Übertragungsbereich des Ziel-Benutzer-Equipments eingerichtet wird;
ein Datenpuffermodul (620), ausgelegt zum Puffern der durch das Datenempfangsmodul (610) entsprechend der in der ersten Zeitplanungsinformation und/oder in den Daten enthaltenen ersten Angabeinformation empfangenen Daten, wobei die erste Angabeinformation verwendet wird, um anzugeben, dass die Daten Daten sind, die weitergeleitet werden sollen; und
ein Datenweiterleitungsmodul (630), ausgelegt zum Weiterleiten der durch das Datenpuffermodul (620) gepufferten Daten zum Ziel-Benutzer-Equipment,
**dadurch gekennzeichnet, dass** der Empfänger ferner ausgelegt ist zum Empfangen einer zweiten Zeitplanungsinformation von einer Basisstation, wobei die zweite Zeitplanungsinformation durch die Basisstation unter Verwendung der Kennung des Ziel-Benutzer-Equipments verschlüsselt wird und die zweite Zeitplanungsinformation durch die Basisstation gleichzeitig zum Ziel-Benutzer-Equipment und zum Transit-Benutzer-Equipment gesendet wird; und
der Sender ferner ausgelegt ist zum Weiterleiten der Daten zum Ziel-Benutzer-Equipment entsprechend der zweiten Zeitplanungsinformation, sodass das Ziel-Benutzer-Equipment die Daten entsprechend der zweiten Zeitplanungsinformation empfängt.

11. Benutzer-Equipment nach Anspruch 10, wobei das Benutzer-Equipment ferner umfasst:
ein erstes Informationsempfangsmodul (640), ausgelegt zum Empfangen einer durch die Basisstation gesendeten ersten Zeitplanungsinformation, wobei das Datenempfangsmodul (610) im Einzelnen ausgelegt ist zum Empfangen der Daten entsprechend der ersten Zeitplanungsinformation, die das erste Informationsempfangsmodul (640) empfängt; und
das Datenpuffermodul (620) ausgelegt ist zum Puffern der Daten entsprechend in der ersten Zeitplanungsinformation, die das erste Informationsempfangsmodul (640) empfängt, und/oder in den Daten, die das Datenempfangsmodul (610) empfängt, enthaltener erster Angabeinformation, wobei die erste Angabeinformation verwendet wird, um anzugeben, dass die Daten Daten sind, die weitergeleitet werden sollen.

12. Benutzer-Equipment nach Anspruch 11, wobei
die in der ersten Zeitplanungsinformation, die das erste Informationsempfangsmodul (640) empfängt, und in den Daten, die das Datenempfangsmodul (610) empfängt, enthaltene erste Angabeinformation umfasst:
eine Kennung des Ziel-Benutzer-Equipments, die in der ersten Zeitplanungsinformation gespeichert ist; oder
eine Kennung des Ziel-Benutzer-Equipments, die in den Daten gespeichert ist;
die erste Angabeinformation in der ersten Zeitplanungsinformation, die das erste Informationsempfangsmodul (640) empfängt, umfasst:
eine Kennung des Ziel-Benutzer-Equipments, die in der ersten Zeitplanungsinformation gespeichert ist; oder
die erste Angabeinformation der in den Daten, die das Datenempfangsmodul (610) empfängt, enthaltenen Daten umfasst:
eine Kennung des Ziel-Benutzer-Equipments.

13. Benutzer-Equipment nach Anspruch 11, wobei das Benutzer-Equipment ferner ein zweites Informationsempfangsmodul (650), ein erstes Datendetektionsmodul (660) und ein zweites Datendetektionsmodul (670) umfasst, wobei
das zweite Informationsempfangsmodul (650) ausgelegt ist zum Empfangen einer dritten Zeitplanungsinformation, die die Basisstation zu einer Gruppe von Benutzer-Equipments sendet, umfassend das Ziel-Benutzer-Equipment und ein Transit-Benutzer-Equipment;
das Datenempfangsmodul (610) im Einzelnen ausgelegt ist zum Empfangen der Daten entsprechend der dritten Zeitplanungsinformation, die das zweite Datenempfangsmodul (650) empfängt, wobei die Daten eine Kennung des Transit-Benutzer-Equipments, eine Kennung des Ziel-Benutzer-Equipments und eine zweite Angabeinformation enthalten und die zweite Angabeinformation verwendet wird, um das Ziel-Benutzer-Equipment vom Transit-Benutzer-Equipment zu unterscheiden; das erste Datendetektionsmodul (660) ausgelegt ist zum Detektieren, ob die Daten, die das Datenempfangsmodul (610) empfängt, ihre eigene Kennung enthalten;
das zweite Datendetektionsmodul (670), falls das erste Datendetektionsmodul (660) detektiert, dass die Daten ihre eigene Kennung enthalten, ausgelegt ist zum Detektieren entsprechend der zweiten Angabeinformation, ob die Daten an sich selbst gesendet werden; und
das Datenpuffermodul (620) ausgelegt ist zum Puffern der Daten, falls das zweite Datendetektionsmodul (670) detektiert, dass die Daten Daten sind, die nicht an sich selbst gesendet werden, sondern weitergeleitet werden sollen, wobei die Gruppe von Benutzer-Equipments das Ziel-Benutzer-Equipment und die Benutzer-Equipments im Kurzstrecken-Übertragungsbereich des Ziel-Benutzer-Equipments umfasst.

## Revendications

1. Procédé d'envoi de données, comprenant :
le pré-stockage (101), par une station de base, de données qui doivent être envoyées à un équipement utilisateur cible sur une mémoire tampon de canal logique public dans la station de base, dans lequel la mémoire tampon de canal logique public est réglée pour l'équipement utilisateur cible et les équipements utilisateurs dans une plage de transmission à courte distance de l'équipement utilisateur cible ;
la sélection (102), par une station de base, d'un équipement utilisateur satisfaisant une condition prédéfinie à partir des équipements utilisateurs dans une plage de transmission d'un équipement utilisateur cible en tant qu'équipement utilisateur de transit, dans lequel la condition prédéfinie fait référence à au moins une des conditions suivantes : un état de canal est le meilleur en fonction des informations d'état de canal mesurées, une distance à partir de l'équipement utilisateur cible est une distance prédéfinie et un type de service en cours d'utilisation satisfait un type de service prédéfini ;
l'envoi (103), par une station de base, des premières informations de planification à l'équipement utilisateur de transit ; et
l'envoi (103), par la station de base, de données dans la mémoire tampon de canal logique public à l'équipement utilisateur de transit, les données étant transmises par l'équipement utilisateur de transit à l'équipement utilisateur cible, dans lequel l'envoi (103) comprend l'envoi en fonction des premières informations de planification des données à l'équipement utilisateur de transit, dans lequel les premières informations de planification et/ou les données contiennent des premières informations d'indications utilisées pour indiquer que les données sont des données qui doivent être transmises,
**caractérisé en ce qu'**après l'envoi (103), par la station de base, des données dans la mémoire tampon de canal logique public à au moins l'équipement utilisateur de transit, le procédé comprend en outre :
l'exécution, par la station de base, du chiffrement en utilisant un identifiant de l'équipement utilisateur cible pour chiffrer des deuxièmes informations de planification et envoyer les deuxièmes informations de planification chiffrées à l'équipement utilisateur cible et à l'équipement utilisateur de transit en même temps pour transmettre les données à l'équipement utilisateur cible.

2. Procédé d'envoi de données selon la revendication 1, dans lequel :
si les premières informations de planification et les données contiennent les premières informations d'indications utilisées pour indiquer que les données sont des données qui doivent être transmises, les premières informations d'indications comprennent : un identifiant de l'équipement utilisateur cible, qui est stocké dans les premières informations de planification ; ou un identifiant de l'équipement utilisateur cible, qui est stocké dans les données ;
si les premières informations de planification contiennent les premières informations d'indications utilisées pour indiquer que les données sont des données qui doivent être transmises, les premières informations d'indications comprennent : un identifiant de l'équipement utilisateur cible, qui est stocké dans les premières informations planification ; ou
si les données contiennent les premières informations d'indications utilisées pour indiquer que les données sont des données qui doivent être transmises, les premières informations d'indications comprennent : un identifiant de l'équipement utilisateur cible qui est stocké dans les données.

3. Procédé de transmission de données, comprenant :
la réception (302), par un UE de transit, des premières informations de planification à partir d'une station de base ;
la réception (303), à partir de la station de base par l'UE de transit, des données en fonction des premières informations de planification et la mise en mémoire tampon des données en fonction des premières informations d'indications, dans les premières informations de planification et/ou les données, et utilisées pour indiquer que les données sont des données qui doivent être transmises, dans lequel les données sont envoyées par la station de base à partir d'une mémoire tampon de canal logique public et la mémoire tampon de canal logique public est définie par la station de base pour l'équipement utilisateur cible et un équipement utilisateur dans une portée de transmission à courte distance de l'équipement utilisateur cible ; et
la transmission (307), par l'UE de transit, des données à l'équipement utilisateur cible,
**caractérisé en ce qu'**avant la transmission des données à l'équipement utilisateur cible, le procédé comprend en outre :
la réception, par l'UE de transit, des deuxièmes informations de planification à partir d'une station de base, dans lequel les deuxièmes informations de planification sont chiffrées par la station de base en utilisant un identifiant de l'équipement utilisateur cible ; et
la transmission des données à l'équipement utilisateur cible comprend :
la transmission, par l'UE de transit, des données à l'équipement utilisateur cible en fonction des deuxièmes informations de planification, de sorte que l'équipement utilisateur cible reçoive les données en fonction des deuxièmes informations de planification.

4. Procédé de transmission de données selon la revendication 3, dans lequel avant la réception et la mise en mémoire tampon (303), par l'UE de transit, des données qu'une station de base envoie à partir d'une mémoire tampon de canal logique public, le procédé comprend en outre :
la réception (302), par l'UE de transit, de premières informations de planification que la station de base envoie ; et
la réception et la mise en mémoire tampon (303), par l'UE de transit, de données qu'une station de base envoie à partir d'une mémoire tampon de canal logique public comprennent :
la réception, par l'UE de transit, des données en fonction des premières informations de planification et de la mise en mémoire tampon des données en fonction des premières informations d'indications, dans les premières informations de planification et/ou les données, utilisées pour indiquer que les données sont des données qui doivent être transmises.

5. Procédé de transmission de données selon la revendication 4, dans lequel :
si les premières informations de planification et les données contiennent les premières informations d'indications utilisées pour indiquer que les données sont des données qui doivent être transmises, les premières informations d'indications comprennent :
un identifiant de l'équipement utilisateur cible, qui est stocké dans les premières informations de planification ; ou
un identifiant de l'équipement utilisateur cible, qui est stocké dans les données ;
si les premières informations de planification contiennent les premières informations d'indications utilisées pour indiquer que les données sont des données qui doivent être transmises, les premières informations d'indications comprennent :
un identifiant de l'équipement utilisateur cible, qui est stocké dans les premières informations de planification ; ou
si les données contiennent les premières informations d'indications utilisées pour indiquer que les données sont des données qui doivent être transmises, les premières informations d'indications comprennent :
un identifiant de l'équipement utilisateur cible qui est stocké dans les données.

6. Procédé de transmission de données selon la revendication 3, dans lequel avant la réception et la mise en mémoire tampon (303), par l'UE de transit, des données qu'une station de base envoie à partir d'une mémoire tampon de canal logique public, le procédé comprend en outre :
la réception, par l'UE de transit, de troisièmes informations de planification que la station de base envoie à un groupe d'équipements utilisateurs comprenant l'équipement utilisateur cible et un équipement utilisateur de transit ; et
la réception et la mise en mémoire tampon, par l'UE de transit, de données qu'une station de base envoie à partir d'une mémoire tampon de canal logique public comprennent :
la réception, par l'UE de transit, des données en fonction des troisièmes informations de planification, dans lequel les données contiennent un identifiant de l'équipement utilisateur de transit, un identifiant de l'équipement utilisateur cible, et des deuxièmes informations d'indications, et les deuxièmes informations d'indications sont utilisées pour distinguer l'équipement utilisateur cible de l'équipement utilisateur de transit ;
la détection, par l'UE de transit, si les données contiennent leurs propres identifiants ;
la détection, par l'UE de transit, si on a détecté que les données contiennent leurs propres identifiants, en fonction des deuxièmes informations d'indications pour savoir si les données sont des données envoyées à elles-mêmes ; et
la mise en mémoire tampon, par l'UE de transit, des données si les données sont des données qui ne sont pas envoyées à elles-mêmes mais doivent être transmises, dans lequel
le groupe d'équipements utilisateurs comprend l'équipement utilisateur cible et les équipements utilisateurs dans la plage de transmission à courte distance de l'équipement utilisateur cible.

7. Station de base, comprenant :
un module de réglage (510), conçu pour régler une mémoire tampon de canal logique public pour un équipement utilisateur cible et des équipements utilisateurs dans une plage de transmission à courte distance de l'équipement utilisateur cible ;
un module de stockage de données (520), conçu pour pré-stocker des données qui doivent être envoyées à l'équipement utilisateur cible sur la mémoire tampon de canal logique public réglée par le module de réglage (510) ;
un module de sélection d'équipement (530), conçu pour sélectionner un équipement utilisateur satisfaisant une condition prédéfinie à partir des équipements utilisateurs dans une plage de transmission de l'équipement utilisateur cible en tant qu'équipement utilisateur de transit, dans lequel la condition prédéfinie fait référence à au moins une des conditions suivantes : un état de canal est le meilleur en fonction des informations d'état de canal mesurées, une distance à partir de l'équipement utilisateur cible est une distance prédéfinie et un type de service en cours d'utilisation satisfait un type de service prédéfini ; et
un premier module d'envoi (540), conçu pour envoyer des premières informations de planification à l'équipement utilisateur de transit, le premier module d'envoi (540) est conçu pour envoyer des données en fonction des premières informations de planification à l'équipement utilisateur de transit sélectionné par le module de sélection d'équipements (530), les données à transmettre par l'équipement utilisateur de transit à l'équipement utilisateur cible, dans lequel les premières informations de planification et/ou les données contiennent des premières informations d'indications utilisées pour indiquer que les données sont des données qui doivent être transmises,
**caractérisé en ce que** la station de base comprend en outre :
un second module d'envoi, conçu pour exécuter un chiffrement en utilisant l'identifiant de l'équipement utilisateur cible pour chiffrer des deuxièmes informations de planification et envoyer les deuxièmes informations de planification chiffrées à l'équipement utilisateur cible et à l'équipement utilisateur de transit sélectionnés par le module de sélection d'équipements en même temps, de sorte que l'équipement utilisateur de transit reçoit les deuxièmes informations de planification et transmet les données à un équipement utilisateur cible en fonction des deuxièmes informations de planification reçues ; de sorte que l'équipement utilisateur cible reçoit, en fonction des deuxièmes informations de planification, les données transmises par l'équipement utilisateur de transit.

8. Station de base selon la revendication 7, dans laquelle :
le premier module d'envoi (540) est conçu spécifiquement pour envoyer des premières informations de planification et les données stockées dans le module de stockage de données à l'équipement utilisateur de transit sélectionné par le module de sélection d'équipements (530), dans lequel les premières informations de planification et/ou les données contiennent des premières informations d'indications utilisées pour indiquer que les données sont des données qui doivent être transmises.

9. Station de base selon la revendication 8, dans laquelle les premières informations d'indications contenues dans les premières informations de planification et les données que le premier module d'envoi (540) envoie comprennent :
un identifiant de l'équipement utilisateur cible, qui est stocké dans les premières informations de planification ; ou
un identifiant de l'équipement utilisateur cible, qui est stocké dans les données ; ou
les premières informations d'indications contenues dans les premières informations de planification que le premier module d'envoi (540) envoie comprennent :
un identifiant de l'équipement utilisateur cible, qui est stocké dans les premières informations de planification ; ou
les premières informations d'indications des données contenues dans les données que le premier module d'envoi (540) envoie comprennent :
un identifiant de l'équipement utilisateur cible qui est stocké dans les données.

10. Équipement utilisateur de transit, comprenant :
un premier module de réception d'informations (640), conçu pour recevoir des premières informations de planification envoyées par une station de base,
un module de réception de données (610), conçu pour recevoir des données en fonction des premières informations de planification, dans lequel les données sont envoyées par une station de base à partir d'une mémoire tampon de canal logique public, dans lequel les données font référence aux données qui doivent être envoyées à un équipement utilisateur cible et la mémoire tampon de canal logique public est réglée par la station de base pour l'équipement utilisateur cible et un équipement utilisateur dans une plage de transmission à courte distance de l'équipement utilisateur cible ;
un module de mise en mémoire tampon de données (620), conçu pour mettre en mémoire tampon les données reçues par le module de réception de données (610) en fonction des premières informations d'indications contenues dans les premières informations de planification et/ou dans les données, dans lequel les premières informations d'indications sont utilisées pour indiquer que les données sont des données qui doivent être transmises ; et
un module de transmission de données (630), conçu pour transmettre les données mises en mémoire tampon par le module de mise en mémoire tampon de données (620) à l'équipement utilisateur cible,
**caractérisé en ce que** le récepteur est conçu en outre pour recevoir des deuxièmes informations de planification à partir d'une station de base, dans lequel les deuxièmes informations de planification sont chiffrées par la station de base en utilisant l'identifiant de l'équipement utilisateur cible et les deuxièmes informations de planification sont envoyées par la station de base à l'équipement utilisateur cible et à l'équipement utilisateur de transit en même temps ; et
l'émetteur est conçu en outre pour transmettre les données à l'équipement utilisateur cible en fonction des deuxièmes informations de planification, de sorte que l'équipement utilisateur cible reçoit les données en fonction des deuxièmes informations de planification.

11. Équipement utilisateur selon la revendication 10, dans lequel l'équipement utilisateur comprend en outre :
un premier module de réception d'informations (640), conçu pour recevoir des premières informations de planification envoyées par la station de base, dans lequel le module de réception de données (610) est conçu spécifiquement pour recevoir les données en fonction des premières informations de planification que le premier module de réception d'informations (640) reçoit ; et
le module de mise en mémoire tampon de données (620) est conçu pour mettre en mémoire tampon les données en fonction des premières informations d'indications dans les premières informations de planification que le premier module de réception d'informations (640) reçoit et/ou dans les données que le module de réception de données (610) reçoit, dans lequel les premières informations d'indications sont utilisées pour indiquer que les données sont des données qui doivent être transmises.

12. Équipement utilisateur selon la revendication 11, dans lequel :
les premières informations d'indications contenues dans les premières informations de planification que le premier module de réception d'informations (640) reçoit et dans les données que le module de réception de données (610) reçoit comprennent :
un identifiant de l'équipement utilisateur cible, qui est stocké dans les premières informations de planification ; ou
un identifiant de l'équipement utilisateur cible, qui est stocké dans les données ;
les premières informations d'indications dans les premières informations de planification que le premier module de réception d'informations (640) reçoit comprennent :
un identifiant de l'équipement utilisateur cible, qui est stocké dans les premières informations de planification ; ou
les premières informations d'indications des données contenues dans les données que le module de réception de données (610) reçoit comprennent :
un identifiant de l'équipement utilisateur cible.

13. Équipement utilisateur selon la revendication 11, dans lequel l'équipement utilisateur comprend en outre un second module de réception d'informations (650), un premier module de détection de données (660) et un second module de détection de données (670), dans lequel
le second module de réception d'informations (650) est conçu pour recevoir des troisièmes informations de planification que la station de base envoie à un groupe d'équipements utilisateurs comprenant l'équipement utilisateur cible et un équipement utilisateur de transit ;
le module de réception de données (610) est conçu spécifiquement pour recevoir les données en fonction des troisièmes informations de planification que le second module de réception d'informations (650) reçoit, dans lequel les données contiennent un identifiant de l'équipement utilisateur de transit, un identifiant de l'équipement utilisateur cible, et des deuxièmes informations d'indications, et les deuxièmes informations d'indications sont utilisées pour distinguer l'équipement utilisateur cible de l'équipement utilisateur de transit ;
le premier module de détection de données (660) est conçu pour détecter si les données que le module de réception de données (610) reçoit contiennent leurs propres identifiants ;
le second module de détection de données (670) est conçu pour détecter, si le premier module de détection de données (660) détecte que les données contiennent leurs propres identifiants, en fonction des deuxièmes informations d'indications pour savoir si les données sont des données envoyées à elles-mêmes ; et
le module de mise en mémoire tampon de données (620) est conçu pour mettre en mémoire tampon les données si le second module de détection de données (670) détecte que les données sont des données qui ne sont pas envoyées à elles-mêmes mais doivent être transmises, dans lequel
le groupe d'équipements utilisateurs comprend l'équipement utilisateur cible et les équipements utilisateurs dans la plage de transmission à courte distance de l'équipement utilisateur cible.
